(19) Europäisches Patentamt
European Patent Office
Office européen des brevets

(11) **EP 4 496 408 A1**

(12) **EUROPEAN PATENT APPLICATION**
published in accordance with Art. 153(4) EPC

(43) Date of publication:
**22.01.2025 Bulletin 2025/04**

(21) Application number: **22939393.9**

(22) Date of filing: **29.04.2022**

(51) International Patent Classification (IPC):
**H04W 72/04** *(2023.01)* **H04W 4/02** *(2018.01)*

(52) Cooperative Patent Classification (CPC):
**H04W 4/02; H04W 72/04**

(86) International application number:
**PCT/CN2022/090699**

(87) International publication number:
**WO 2023/206547 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventors:
• **ZHANG, Shichang**
  **Dongguan, Guangdong 523860 (CN)**
• **DING, Yi**
  **Dongguan, Guangdong 523860 (CN)**

(74) Representative: **RGTH
Patentanwälte PartGmbB
Neuer Wall 10
20354 Hamburg (DE)**

(54) **POSITIONING METHODS AND APPARATUSES FOR RELATIVE LOCATION, DEVICE AND MEDIUM**

(57) The present application discloses a positioning method of a relative position, an apparatus, a device and a medium, and relates to the field of sidelink communication. The method includes: transmitting a first sidelink positioning reference signal to a reference terminal; receiving feedback information of the first sidelink positioning reference signal transmitted by the reference terminal; and determining a relative positioning result of a target terminal relative to the reference terminal based on the feedback information of the first sidelink positioning reference signal. By using a flexible positioning method of a relative position in the sidelink communication, sidelink-based relative positioning can be realized in different ways, and the accuracy of the sidelink-based relative positioning is improved.

A first sidelink positioning reference signal is transmitted to a reference terminal — 1110

Feedback information of the first sidelink positioning reference signal transmitted by the reference terminal is received — 1120

A relative positioning result of a target terminal relative to the reference terminal is determined based on the feedback information of the first sidelink positioning reference signal — 1130

FIG. 11

**Description**

**TECHNICAL FIELD**

The present application relates to the field of sidelink communication, and more particularly, to a positioning method of a relative position, an apparatus, a device and a medium.

**BACKGROUND**

In sidelink (SL) communication, in order to support sidelink-based positioning, a terminal is required to transmit a positioning reference signal (PRS) on a sidelink. In the related art, there is currently no feasible solution on how the terminal should transmit or receive a SL-PRS for a sidelink-based relative positioning method.

**SUMMARY**

Embodiments of the present application provide a positioning method of a relative position, an apparatus, a device and a medium, which can be used in sidelink communication, to improve accuracy of sidelink positioning by flexibly transmitting a positioning reference signal (PRS).

According to an aspect of the present application, a positioning method of a relative position is provided, and the method includes:

transmitting a first sidelink positioning reference signal to a reference terminal;
receiving feedback information of the first sidelink positioning reference signal transmitted by the reference terminal; and
determining a relative positioning result of a target terminal relative to the reference terminal based on the feedback information of the first sidelink positioning reference signal.

According to an aspect of the present application, a positioning method of a relative position is provided, and the method includes:

receiving a first sidelink positioning reference signal transmitted by a target terminal; and
transmitting feedback information of the first sidelink positioning reference signal to the target terminal, the feedback information of the first sidelink positioning reference signal being used to determine a relative positioning result of the target terminal relative to a reference terminal.

According to an aspect of the present application, a positioning apparatus of a relative position is provided, and the apparatus includes:

a first transmitting module, configured to transmit a first sidelink positioning reference signal to a reference terminal;
a first receiving module, configured to receive feedback information of the first sidelink positioning reference signal transmitted by the reference terminal; and
a first determining module, configured to determine a relative positioning result of a target terminal relative to the reference terminal based on the feedback information of the first sidelink positioning reference signal.

According to an aspect of the present application, a positioning apparatus of a relative position is provided, and the apparatus includes:

a second receiving module, configured to receive a first sidelink positioning reference signal transmitted by a target terminal; and
a second transmitting module, configured to transmit feedback information of the first sidelink positioning reference signal to the target terminal, the feedback information of the first sidelink positioning reference signal being used to determine a relative positioning result of the target terminal relative to a reference terminal.

According to an aspect of the present application, a target terminal is provided, and the terminal includes: a processor; a transceiver connected to the processor; and a memory configured to store executable instructions of the processor. The processor is configured to load and execute the executable instructions to implement the positioning method of the relative position as described in the above aspect.

According to an aspect of the present application, a reference terminal is provided, and the terminal includes: a processor; a transceiver connected to the processor; and a memory configured to store executable instructions of the processor. The processor is configured to load and execute the executable instructions to implement the positioning method of the relative position as described in the above aspect.

According to an aspect of the present application, a network device is provided, and the network device includes: a processor; a transceiver connected to the processor; and a memory configured to store executable instructions of the processor. The processor is configured to load and execute the executable instructions to implement the positioning method of the relative position as described in the above aspect.

According to an aspect of the present application, a computer-readable storage medium is provided. The computer program product has executable instructions stored therein, and the executable instructions are loaded and executed by a processor to implement the positioning methods of the relative position as described in the above aspects.

According to an aspect of the present application, a computer program product is provided. The computer program product has executable instructions stored therein, and the executable instructions are loaded and executed by a processor to implement the positioning methods of the relative position as described in the above aspects.

According to an aspect of the present application, a chip is provided. The chip includes: a programmable logic circuit and/or program instructions, when the chip is running, the positioning methods of the relative position as described in the above aspects are implemented.

According to an aspect of the present application, a communication system is provided, and the sidelink communication system includes: a first terminal and a second terminal. The first terminal is configured to implement the positioning methods of the relative position as described in the above aspects.

Technical solutions provided by the embodiments of the present application include at least the following beneficial effects.

By using a flexible positioning method of a relative position in the sidelink communication, sidelink-based relative positioning can be realized in different ways, and the accuracy of the sidelink-based relative positioning is improved.

## BRIEF DESCRIPTION OF THE DRAWINGS

In order to illustrate the technical solutions in the embodiments of the present application more clearly, accompanying drawings required in the description of the embodiments will be briefly introduced below. It is apparent that the accompanying drawings in the following description are merely some embodiments of the present application. For those of ordinary skill in the art, other drawings can also be obtained according to these accompanying drawings without creative efforts.

FIG. 1 illustrates a schematic diagram of an operation scenario of sidelink transmission in the related art.
FIG. 2 illustrates a schematic diagram of an operation scenario of sidelink transmission in the related art.
FIG. 3 illustrates a schematic diagram of an operation scenario of sidelink transmission in the related art.
FIG. 4 illustrates a schematic diagram of an operation scenario of sidelink transmission in the related art.
FIG. 5 illustrates a schematic diagram of an operation scenario of sidelink transmission in the related art.
FIG. 6 illustrates a schematic diagram of an operation scenario of sidelink transmission in the related art.
FIG. 7 illustrates a schematic diagram of a part of symbols in a slot used for SL transmission in the related art.
FIG. 8 illustrates a schematic diagram of PSCCH and PSSCH slot structures in the related art.
FIG. 9 illustrates a schematic diagram of time domain positions of 4 DMRS symbols when a PSSCH occupies 13 symbols in the related art.
FIG. 10 illustrates a schematic diagram of frequency domain positions of a PSSCH DMRS in the related art.
FIG. 11 illustrates a flowchart of a positioning method of a relative position provided by an exemplary embodiment of the present application.
FIG. 12 illustrates a schematic diagram of a transmission mode of a first sidelink positioning reference signal provided by an exemplary embodiment of the present application.
FIG. 13 illustrates a schematic diagram of a multiplexing mode of OFDM provided by an exemplary embodiment of the present application.
FIG. 14 illustrates a schematic diagram of a signal indication mode provided by an exemplary embodiment of the present application.
FIG. 15 illustrates a schematic diagram of a resource occupancy situation within a first slot provided by an exemplary embodiment of the present application.
FIG. 16 illustrates a schematic diagram of a transmission mode of a reserved resource provided by an exemplary embodiment of the present application.
FIG. 17 illustrates a schematic diagram of a transmission mode of a sidelink message provided by an exemplary embodiment of the present application.
FIG. 18 illustrates a schematic diagram of a transmission mode of a control signal provided by an exemplary embodiment of the present application.

FIG. 19 illustrates a schematic diagram of a transmission mode of a sidelink message provided by an exemplary embodiment of the present application.

FIG. 20 illustrates a flowchart of a positioning method of a relative position provided by an exemplary embodiment of the present application.

FIG. 21 illustrates a flowchart of a positioning method of a relative position provided by an exemplary embodiment of the present application.

FIG. 22 illustrates a structural block diagram of a positioning apparatus of a relative position provided by an exemplary embodiment of the present application.

FIG. 23 illustrates a structural block diagram of another sidelink positioning provided by an exemplary embodiment of the present application.

FIG. 24 is a schematic structural diagram of a sidelink positioning communication device provided by an exemplary embodiment of the present application.

## DETAILED DESCRIPTION

In order to make objectives, technical solutions and advantages of the present application more clearly, implementations of the present application will be described in further detail below with reference to the accompanying drawings. Exemplary embodiments, examples of which are illustrated in the accompanying drawings, will be described in detail here. When the following description refers to the accompanying drawings, the same numerals in different accompanying drawings represent the same or similar elements unless otherwise indicated. The implementations described in the following exemplary embodiments do not represent all implementations consistent with the present application. Rather, they are merely examples of apparatus and methods consistent with some aspects of the present application as detailed in appended claims.

The terms used in the present disclosure are merely for the purpose of describing particular embodiments, and are not intended to limit the present disclosure. As used in the present disclosure and the appended claims, the singular forms "a/an", "the" and "the said" are also intended to include the plural forms, unless context clearly indicates otherwise. It should also be understood that the term "and/or" as used herein refers to and includes any or all possible combinations of one or more associated listed items.

It should be understood that although the terms first, second, third or the like may be used in the present disclosure to describe various types of information, such information should not be limited to these terms. These terms are merely used to distinguish the same type of information from each other. For example, without departing from the scope of the present disclosure, first information may also be referred to as second information, and similarly, second information may also be referred to as first information. Depending on the context, the phrase "if" as used herein may be interpreted as "when" or "while" or "in response to determining".

Firstly, the related technical background involved in the embodiments of the present application is introduced.

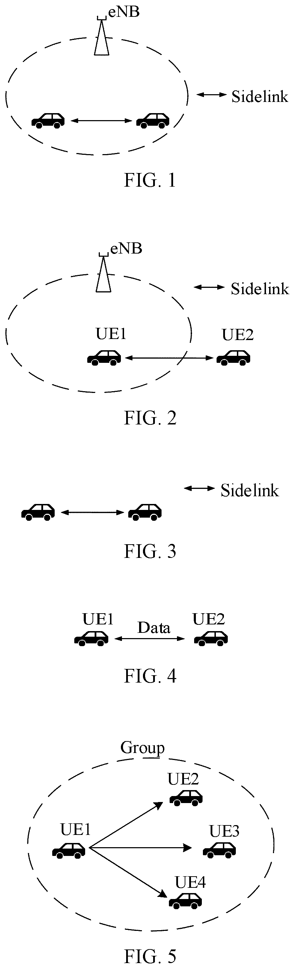

In sidelink communication, according to network coverage in which a terminal user equipment (UE) performing communication is located, the sidelink communication can be categorized into sidelink communication within network coverage, sidelink communication within partial network coverage and sidelink communication outside network coverage, as illustrated in FIG. 1, FIG. 2 and FIG. 3, respectively.

As illustrated in FIG. 1, in the sidelink communication within network coverage, all terminals performing sidelink communication are located within a coverage range of a same base station, so that the terminals can perform sidelink communication based on same sidelink configuration by receiving a configuration signaling of the base station. As illustrated in FIG. 2, in the sidelink communication within partial network coverage, some terminals performing sidelink communication are located within the coverage range of the base station, and these terminals can receive the configuration signaling of the base station and perform sidelink communication according to the configuration of the base station. While terminals located outside a coverage range of a network cannot receive the configuration signaling of the base station. In this case, the terminals located outside the coverage range of the network will determine sidelink configuration according to pre-configuration information and information carried on a physical sidelink broadcast channel (PSBCH) transmitted by the terminals located within the coverage range of the network, to perform sidelink communication. As illustrated in FIG. 3, for the sidelink communication outside network coverage, all terminals performing sidelink communication are located outside the coverage range of the network, and all terminals determine the sidelink configuration according to the pre-configuration information, to perform sidelink communication.

Device to Device (D2D)/Vehicle to Everything (V2X)

Device to device communication belongs to a sidelink (SL) transmission technology based on D2D, which is different from a manner of receiving or transmitting communication data through a base station in a traditional cellular system, and thus it has higher spectral efficiency and lower transmission delay. A vehicle to everything system adopts a manner of terminal-to-terminal direct communication, and two transmission modes are defined in 3GPP: a first mode and a second mode.

First mode: a transmission resource of a terminal is allocated by a base station, and the terminal performs data transmission on a sidelink according to the resource allocated by the base station. The base station may allocate a resource for single transmission to the terminal, or may allocate a resource for semi-static transmission to the terminal. As illustrated in FIG. 1, the terminals are located within the coverage range of the network, and the network allocates transmission resources for the terminals to be used for sidelink transmission.

Second mode: the terminal selects a resource from a resource pool for data transmission. As illustrated in FIG. 3, the terminals are located outside a coverage range of a cell, and the terminals independently select transmission resources in a preconfigured resource pool for sidelink transmission. Alternatively, in FIG. 1, the terminals independently select transmission resources in a resource pool configured by the network for sidelink transmission.

Resource selection in the second mode is performed according to the following two steps.

Step 1: the terminal takes all available resources within a resource selection window as resource set A.

If the terminal transmits data on certain slots within a listening window and does not perform listening, all resources on slots, corresponding to these slots, within the selection window are excluded. The terminal determines corresponding slots within the selection window by using a set of values of a resource reservation period field in resource pool configuration used.

If the terminal listened to a physical sidelink control channel (PSCCH) within the listening window, the terminal measures a reference signal received power (RSRP) of the PSCCH or an RSRP of a physical sidelink shared channel (PSSCH) scheduled by the PSCCH. If a measured RSRP is larger than a SL-RSRP threshold and it is determined that reserved resources are within the resource selection window according to resource reservation information in sidelink control information transmitted on the PSCCH, corresponding resources are excluded from set A. If remaining resources in resource set A are less than X% of all resources in resource set A which before resource exclusion, the SL-RSRP threshold is raised by 3 dB, and the step 1 is re-performed. Possible values of X are {20, 35, 50}, and the terminal determines the parameter X from the set of values according to a priority of data to be transmitted. Further, the SL-RSRP threshold is related to a priority carried on the PSCCH listened by the terminal and the priority of the data to be transmitted by the terminal. The terminal takes the remaining resources in the set A after resource exclusion as a candidate resource set.

Step 2: the terminal randomly selects several resources from the candidate resource set as transmission resources for its initial transmission and retransmission.

New Radio (NR)-V2X

In NR-V2X, autonomous driving needs to be supported, therefore, higher requirements are put forward for data exchange between vehicles, such as, higher throughput, lower delay, higher reliability, larger coverage range, or more flexible resource allocation.

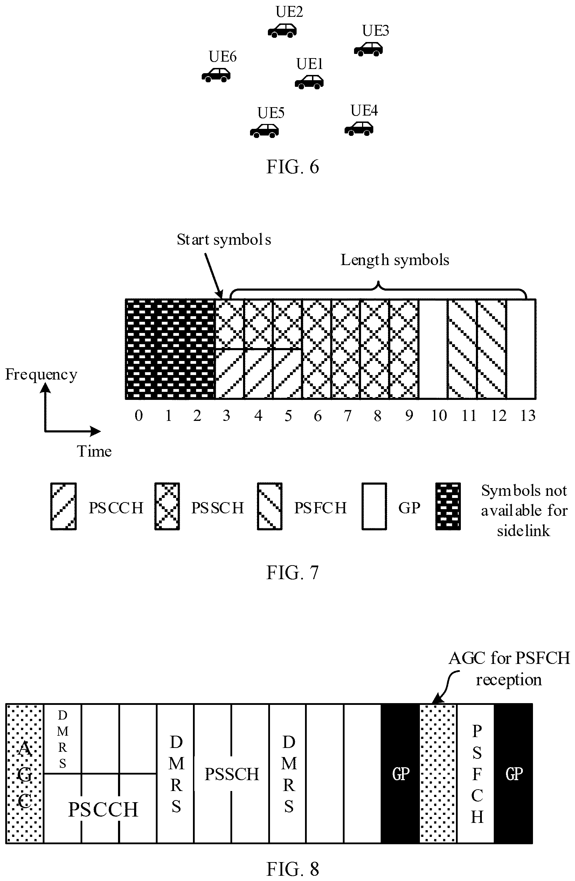

In LTE-V2X, a transmission manner of broadcast is supported, and in NR-V2X, transmission manners of unicast and multicast are introduced. For unicast transmission, there is only one terminal as its receiving terminal. As illustrated in FIG. 4, unicast transmission is performed between UE1 and UE2. For multicast transmission, its receiving terminals are all terminals in a communication group or all terminals within a certain transmission distance. As illustrated in FIG. 5, UE1, UE2, UE3 and UE4 form a communication group, where UE1 transmits data, and other terminal devices in the communication group are the receiving terminals. For the transmission manner of broadcast, its receiving terminal is any one terminal around a transmitting terminal. As illustrated in FIG. 6, UE1 is a transmitting terminal, and other terminals around UE1, such as UE2, UE3, UE4, UE5 and UE6 are all the receiving terminals.

Slot structure in NR-V2X

In NR-V2X, a PSSCH and its associated PSCCH are transmitted in a same slot, and the PSCCH occupies 2 or 3 time domain symbols. Time domain resource allocation in NR-V2X takes a slot as allocation granularity. A starting point and length of time domain symbols used for sidelink transmission in a slot are configured by parameters, that is, sidelink start symbols (SL-StartSymbols) and sidelink length symbols (SL-LengthSymbols). The last symbol in these symbols is used as a guard period (GP), and the PSSCH and PSCCH can only use remaining time domain symbols. However, if a transmission resource of a physical sidelink feedback channel (PSFCH) is configured in the slot, the PSSCH and PSCCH cannot occupy time domain symbols used for PSFCH transmission, automatic gain control (AGC) as well as GP symbols before the symbols.

As illustrated in FIG. 7, a network configures that sidelink start symbols equals to 3 (SL-StartSymbols=3) and sidelink length symbols equals to 11 (SL-LengthSymbols=11), that is, 11 time domain symbols starting from symbol index 3 (i.e., symbols 3 to 13) in a slot may be used for sidelink transmission, and there are PSFCH transmission resources in the slot. The PSFCH occupies symbols 11 and 12, where symbol 11 is used as an AGC symbol of the PSFCH, symbols 10 and 13 are used as GPs, respectively, and time domain symbols available for PSSCH transmission are symbols 3 to 9. PSCCH occupies 3 time domain symbols, that is, symbols 3, 4 and 5, and symbol 3 is usually used as an AGC symbol.

In addition to the PSCCH and PSSCH, the PSFCH may also exist within a sidelink slot in NR-V2X, as illustrated in FIG. 8. It can be seen that within a slot, a first orthogonal frequency division multiplexing (OFDM) symbol is fixed for AGC, and on the AGC symbol, the UE copies information transmitted on a second symbol. One symbol is left at an end of the slot for transceiving conversion, which is used for the UE to convert from a transmitting (or receiving) state to a receiving (or transmitting) state. In remaining OFDM symbols, the PSCCH may occupy two or three OFDM symbols starting from a second sidelink symbol, and in the frequency domain, a number of physical resource blocks (PRBs) occupied by the PSCCH is within a subband range of one PSSCH. If the number of PRBs occupied by the PSCCH is less than a size of one subchannel of the PSSCH, or frequency domain resources of the PSSCH includes multiple subchannels, the PSCCH may be frequency division multiplexed with the PSSCH on OFDM symbols in which the PSCCH is located.

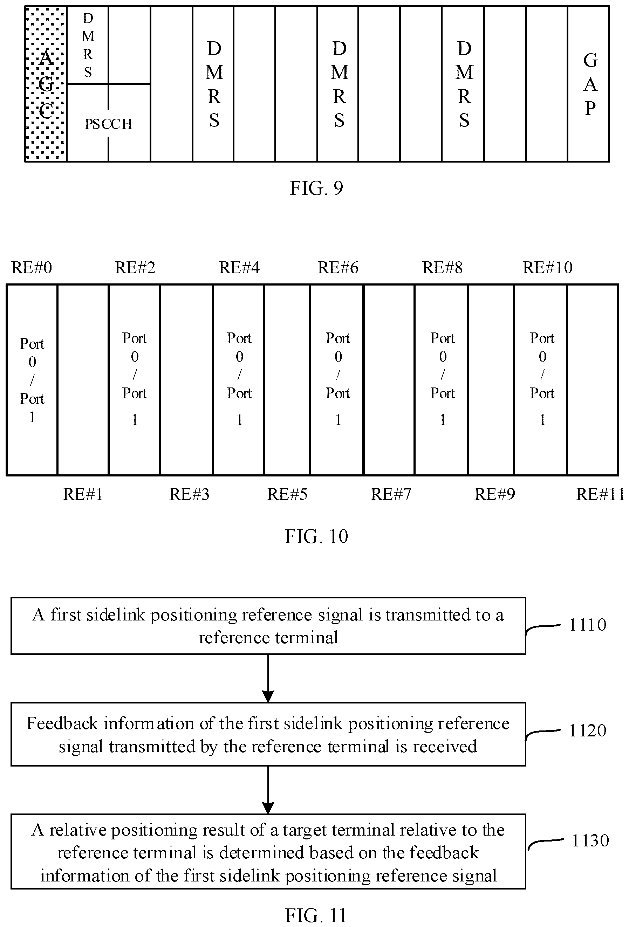

Demodulation reference symbols (DMRSs) of the PSSCH in NR-V2X draws lessons from design of a terminal and network communication (User-Equipment UTRAN, Uu) interface in NR, and adopts multiple time domain PSSCH DMRS patterns. Within one resource pool, the number of available DMRS patterns is related to the number of PSSCH symbols within the resource pool. For a specific number of PSSCH symbols (including a first AGC symbol) and the number of PSCCH symbols, available DMRS patterns and a position of each DMRS symbol within the patterns are shown in Table 1. FIG. 9 illustrates a schematic diagram of time domain positions of 4 DMRS symbols when the PSSCH occupies 13 symbols.

Table 1 Number and position of DMRS symbols under different numbers of PSSCH and PSCCH symbols

| Number of PSSCH symbols (including first AGC symbol) | Position of DMRS symbol (relative to position of first AGC symbol) | | | | | |
|---|---|---|---|---|---|---|
| | Number of PSCCH symbols is 2 | | | number of PSCCH symbols is 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1, 4, 7 | | 4, 8 | 1, 4, 7 | |
| 10 | 3, 8 | 1, 4, 7 | | 4, 8 | 1, 4, 7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 3 | 3, 10 | 1, 6, 11 | 1, 4, 7, 10 | 4, 10 | 1, 6, 11 | 1, 4, 7, 10 |

If multiple time domain DMRS patterns are configured within the resource pool, a specific time domain DMRS pattern to be adopted is selected by a transmitting UE and indicated in first-stage sidelink control information (SCI). Such a design allows a UE with high-speed motion to select a high-density DMRS pattern, thereby ensuring accuracy of channel estimation; while for a UE with low-speed motion, a low-density DMRS pattern may be adopted, thereby improving spectral efficiency.

A generation manner of a PSSCH DMRS sequence is almost identical to that of a PSCCH DMRS sequence, a only difference is that, in an initialization formula $c_{\text{init}}$ of the pseudo-random sequence c(m), $N_{ID} = \sum_{i=0}^{L-1} p_i \cdot 2^{L-1-i}$, in which $p_i$ is an i-th cyclic redundancy check (CRC) of the PSCCH that schedules the PSSCH, L=24 and is the number of bits of PSCCH CRC.

In NR, a physical downlink shared channel (PDSCH) and a physical uplink shared channel (PUSCH) support two types of frequency domain DMRS patterns, that is, DMRS frequency domain type 1 and DMRS frequency domain type 2. For each frequency domain type, there are two different types of single DMRS symbol and double DMRS symbol. Single-symbol DMRS frequency domain type 1 supports 4 DMRS ports, and single-symbol DMRS frequency domain type 2 may support 6 DMRS ports. In a case of dual DMRS symbols, the number of supported ports is doubled. However, in NR-V2X, since the PSSCH only is required to support two DMRS ports at most, only a single-symbol DMRS frequency domain type 1 is supported, as illustrated in FIG. 10.

Sidelink-based positioning

Sidelink-based positioning is one of enhanced solutions of R18 positioning technology. In this topic, scenarios and requirements of supporting NR positioning use cases within coverage, partial coverage and outside coverage of the cellular network will be considered; positioning requirements of V2X use case, public safety use case, commercial use case and Industrial Internet Of Things (IIOT) use cases will be considered, and the following functions will be considered to support:

- absolute positioning, ranging/direction-finding and relative positioning;
- studying a positioning method of combining sidelink measurement quantities with Uu interface measurement quantities;
- studying sidelink positioning reference signals, including signal design, physical layer control signaling, resource allocation, physical layer measurement quantities, and related physical layer processes, or the like; and
- studying a positioning system architecture and signaling procedure, such as, configuration, measurement reporting, or the like.

It should be understood that, in some embodiments of the present application, "NR" may also be referred to as a 5G NR system or a 5G system. Technical solutions described in some embodiments of the present application may be applicable to the 5G NR system, may also be applicable to a subsequent evolution system of the 5G NR system, or may also be applicable to a 6G and subsequent evolution systems.

FIG. 11 illustrates a flowchart of a positioning method of a relative position provided by an exemplary embodiment of the present application. The present embodiment is illustrated by taking an example of the method being applied to a target terminal, and the method includes at least part of the following steps.

Step 1110: a first sidelink positioning reference signal is transmitted to a reference terminal.

The first sidelink positioning reference signal (SL-PRS) is an SL-PRS associated with a PSCCH and/or a PSSCH, that is, the target terminal need to transmit the first SL-PRS according to an indication of the PSCCH and/or PSSCH, and a second type of SL-PRS transmitted by a terminal may be used to support relative positioning. The relative positioning refers to that an offset value relative to a reference position is obtained by positioning, and the reference position is its own original position or a position of a certain reference point.

In some embodiments, the target terminal is in a sidelink communication scenario of unicast, or in a sidelink communication scenario of multicast, or in a sidelink communication scenario of broadcast.

Optionally, the target terminal and the reference terminal are in sidelink communication within network coverage, or sidelink communication within partial network coverage, or in sidelink communication outside network coverage. In the sidelink communication within partial network coverage, any one of the target terminal or the reference terminal is within a coverage range of a base station.

Optionally, the target terminal is equipped with a single antenna, and transmits the first SL-PRS to the reference terminal through the single antenna. Alternatively, the target terminal is equipped with an array antenna which includes multiple groups of antennas arranged in a certain manner, and transmits the first SL-PRS to the reference terminal through the multiple groups of antennas.

Optionally, the target terminal transmits the first SL-PRS to the reference terminal according to a target period, that is, continuously transmits the first SL-PRS to the reference terminal according to a specified time interval. Alternatively, the target terminal transmits the first SL-PRS to the reference terminal only once at a time.

Step 1120: feedback information of the first sidelink positioning reference signal transmitted by the reference terminal is received.

Schematically, the feedback information of the first SL-PRS includes signal data transmitted by the reference terminal to the target terminal after receiving the first SL-PRS transmitted by the target terminal, which is taken as the feedback information of the first SL-PRS.

In some embodiments, the feedback information of the first SL-PRS includes a second sidelink positioning reference signal (SL-PRS) and a transceiving time difference, and the transceiving time difference is used to indicate a time difference between a reception end time of the first sidelink positioning reference signal and a transmission start time of the second sidelink positioning reference signal.

Optionally, the first SL-PRS and the second SL-PRS may be distinguished by different resources, and the resources include at least one resources in: a time domain, a frequency domain or a code domain, for example, the first SL-PRS and the second SL-PRS are transmitted in different resource pools configured or preconfigured by the base station, or transmitted on different time-frequency resources in the same resource pool, or transmitted on the same time-frequency resource in the same resource pool through different sequences (i.e., different code domain resources), respectively. That is, transmission resources used by the first SL-PRS and the second SL-PRS are different, or resource pools corresponding to the first SL-PRS and the second SL-PRS are different.

In some embodiments, the feedback information of the first SL-PRS includes at least one of a relative direction or a relative distance of the target terminal relative to the reference terminal.

Both the relative direction and the relative distance are transmitted to the target terminal by means of a sidelink message.

Step 1130: a relative positioning result of the target terminal relative to the reference terminal is determined based on the feedback information of the first sidelink positioning reference signal.

In some embodiments, at least one of the relative direction or the relative distance of the target terminal relative to the reference terminal is calculated based on the second sidelink positioning reference signal and the transceiving time difference.

Schematically, in a case where the relative positioning result includes the relative direction, the relative direction of the target terminal relative to the reference terminal is determined by means of calculating an angle of arrival (AOA). In a process of calculating the AOA, calculating manners of the AOA includes at least one of the following two manners.

First manner of calculating the AOA

The target terminal is equipped with a single antenna, and the reference terminal is equipped with an array antenna. The target terminal transmits the first SL-PRS to the reference terminal through the single antenna, and when a transmission signal corresponding to the first SL-PRS passes through the array antenna of the reference terminal, the reference terminal collects the signal of the first SL-PRS and then calculates the angle of arrival of the signal corresponding to the first SL-PRS, so as to obtain a relative angle between the target terminal and the reference terminal. The relative angle is transmitted to the target terminal as the feedback information of the first SL-PRS in a form of a sidelink message, and the target terminal takes a received calculation result of the relative angle as the relative positioning result.

Second manner of calculating the AOA

The target terminal is equipped with an array antenna, and the reference terminal is equipped with a single antenna. After the target terminal transmits the first SL-PRS to the reference terminal through the array antenna, in a process of receiving the feedback information of the first SL-PRS transmitted by the reference terminal through the single antenna, when a transmission signal corresponding to the feedback information of the first SL-PRS passes through the array antenna of the target terminal, the target terminal collects the signal corresponding to the feedback information of the first SL-PRS and then calculates the angle of arrival of the signal of the feedback information of the first SL-PRS, to obtain a relative angle between the reference terminal and the target terminal, and takes the relative angle as the relative positioning result.

Schematically, in a case where the relative positioning result includes the relative distance, the relative positioning result is determined by means of the transceiving time difference or a signal received strength.

First manner of determining the relative distance

In a case where the feedback information of the first SL-PRS received by the target terminal includes the second SL-PRS and the transceiving time difference, the relative distance between the target terminal and the reference terminal is determined according to the second SL-PRS and the transceiving time difference. For example, relative distance = $(T_4-T_1-T_d)/2*V$. Here, $T_4$ is a reception end timing of the second SL-PRS, $T_1$ is a transmission start timing of the first SL-PRS, $T_d$ is the transceiving time difference, and V is a transmission speed of an electromagnetic wave.

Second manner of determining the relative distance

In a case where the reference terminal receives a signal received power of the first SL-PRS, the reference terminal calculates the relative distance between the reference terminal and the target terminal through the signal received power, and transmits the relative distance to the target terminal in a manner of a sidelink message. The target terminal takes the relative distance as the relative positioning result after receiving the sidelink message. For example, the relative distance is equal to a difference between a signal transmit power and a signal received power divided by a rate at which signal decays with distance, i.e., relative distance = (signal transmit power - signal received power)/rate at which the signal decays with distance.

The above methods are applicable to a sidelink communication scenario based on the first mode and/or a sidelink communication scenario based on the second mode.

In some embodiments, the above transmission methods may be used alone or in combination.

In the embodiments of the present application, the first manner of determining the relative distance may be combined with the first manner of calculating the AOA. Alternatively, the first manner of determining the relative distance may be combined with the first manner of calculating the AOA and the second manner of calculating the AOA, and the present application is not limited thereto.

In summary, in the methods provided by the present embodiments, by using a flexible positioning method of a relative position in the sidelink communication, sidelink-based relative positioning can be realized in different ways, and the accuracy of the sidelink-based relative positioning can be improved.

A positioning method of a relative position will be described below for a case where a relative positioning result includes at least one of a relative position or a relative direction of a target terminal and a reference terminal.

Embodiment one: for a case where feedback information of a first SL-PRS includes a second SL-PRS and a transceiving time difference.

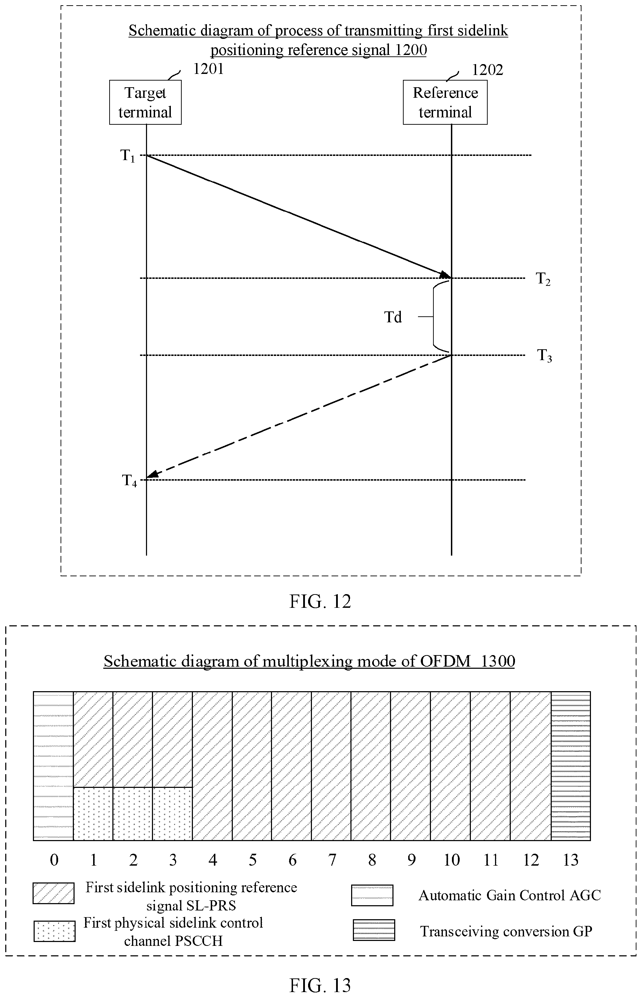

Schematically, referring to FIG. 12, a schematic diagram of a transmission mode of a first sidelink positioning reference signal provided by an exemplary embodiment of the present application is illustrated. As illustrated in FIG. 12, a target terminal 1201 transmits a first SL-PRS to a reference terminal 1202 at timing $T_1$, the reference terminal 1202 receives the first SL-PRS at timing $T_2$, and transmits feedback information of the first SL-PRS to the reference terminal 1202 at timing $T_3$. The feedback information of the first SL-PRS includes a second SL-PRS and a transceiving time difference $T_d$, and the target terminal receives the feedback information of the first SL-PRS at timing $T_4$.

Here, $T_d$ represents a time difference between a reception timing when the reference terminal receives the first SL-PRS and a transmission timing when the reference terminal transmits the feedback information of the first SL-PRS, and the relative distance is determined according to the transceiving time difference. Schematically, relative distance = $(T_4-T_1-T_4)/2*V$. Here, $T_4$ is a reception end timing of the second SL-PRS, $T_1$ is a transmission start timing of the first SL-PRS, $T_d$ is the transceiving time difference, and V is a transmission speed of an electromagnetic wave.

Schematically, before the target terminal transmits the first SL-PRS to the reference terminal, it is necessary to select a transmission resource for transmitting the first SL-PRS. Where acquiring manners of the transmission resource of the first SL-PRS includes the following two manners.

Transmission resource acquiring manner one: the first SL-PRS transmitted by the target terminal on a sidelink is transmitted by a transmission resource allocated by a network device.

In some embodiments, a transmission resource of the first sidelink positioning reference signal scheduled by the network device is received, the transmission resource of the first sidelink positioning reference signal is selected by the network device from a first resource pool, and the first resource pool is a resource pool that supports a first transmission mode of the sidelink.

Schematically, the first transmission mode corresponds to the first mode of resource transmission in the sidelink, and the transmission resource of the first SL-PRS selected by the target terminal is a resource that the network device instructs the target terminal to perform transmission by selecting a specified transmission resource in the first resource pool.

Transmission resource acquiring manner two: the first SL-PRS transmitted by the target terminal on the side link is transmitted by a transmission resource independently selected by the target terminal in a resource pool.

In some embodiments, a transmission resource of the first sidelink positioning reference signal is selected from a second resource pool; where the second resource pool is a resource pool that supports a second transmission mode of the sidelink.

In some embodiments, the second resource pool includes multiple transmission resources, including those are applicable to the target terminal for performing resource transmission and those are not applicable to the target terminal for performing resource transmission. Therefore, the target terminal is required to independently select the transmission resource for transmitting the first SL-PRS from the second resource pool, and thus, a mode of which the target terminal transmits the resource corresponds to the second mode of the sidelink.

Optionally, the second resource pool and a resource pool of the second mode correspond to the same resource pool, that is, the second resource pool is a resource pool preconfigured by the network device. Alternatively, the second resource pool overlaps with the resource pool of the second mode, that is, the second resource pool includes some resources preconfigured by the network device. Alternatively, the second resource pool is a resource pool separately configured for the target terminal, and does not overlap with the resource pool of the second mode.

Schematically, in a case where the second resource pool is the same as or overlaps with the resource pool of the second mode, the target terminal independently selects the transmission resource for transmitting the first SL-PRS from the second resource pool, and thus, a resource transmission manner of the target terminal corresponds to the resource transmission manner under the second mode of the sidelink.

Optionally, in a case where the target terminal performs resource transmission by the second mode, the target terminal may select the transmission resource from the second resource pool by means of listening, or select the transmission resource from the second resource pool by means of random selection.

Step 1110: the first sidelink positioning reference signal is transmitted to the reference terminal.

Schematically, in a case where the target terminal selects a resource from the second resource pool by the second mode to transmit the first SL-PRS to the reference terminal, it is necessary to determine an indication mode of the first SL-PRS.

In some embodiments, the first SL-PRS transmitted to the reference terminal is indicated by a first PSCCH, that is, the target terminal simultaneously transmits the first SL-PRS and the first PSCCH within a transmission slot of the first SL-PRS. Alternatively, the first SL-PRS is indicated by the first PSCCH or second-stage sidelink control information (SCI), that is, the first SL-PRS, the first PSCCH or a first PSSCH are simultaneously transmitted within the transmission slot of the first SL-PRS.

The above two indication manners will be specifically described below.

Indication manner one: the first SL-PRS is indicated by the first PSCCH.

In some embodiments, the first sidelink positioning reference signal occupies a first slot, the first sidelink positioning reference signal and the first physical sidelink control channel (PSCCH) are simultaneously transmitted within the first slot, and the first PSCCH is used to indicate that the first slot is a slot used for transmitting the first sidelink positioning reference signal.

Schematically, the first SL-PRS transmitted by the target terminal is indicated by the first PSCCH, that is, only the first SL-PRS and the first PSCCH are transmitted within the first slot occupied by the first SL-PRS transmitted by the target terminal.

A format of the first PSCCH includes a number of orthogonal frequency division multiplexing (OFDM) symbols, a number of physical resource blocks (PRBs), or the like occupied by the first PSCCH.

The format of the first PSCCH and configuration of the second resource pool are the same. Schematically, as illustrated in FIG. 13, a schematic diagram of a multiplexing mode of OFDM provided by an exemplary embodiment of the present application is illustrated. As illustrated in FIG. 13, on an OFDM symbol in which the first PSCCH is located, the first SL-PRS is transmitted on frequency domain resources indicated by the first PSCCH except the frequency domain resources occupied by the first PSCCH, that is, the frequency domain resources occupied by the first SL-PRS do not overlap with the frequency domain resources occupied by the first PSCCH. On a first OFDM symbol (symbol #0) of the current first slot, information transmitted by the target terminal is the same as that transmitted on a second OFDM symbol (symbol #1), that is, this is for AGC adjustment; on a last OFDM symbol (symbol #13) of the current first slot, the target terminal does not transmit any information, that is, this is for transceiving conversion; and on other OFDM symbols, the target terminal should transmit the first SL-PRS.

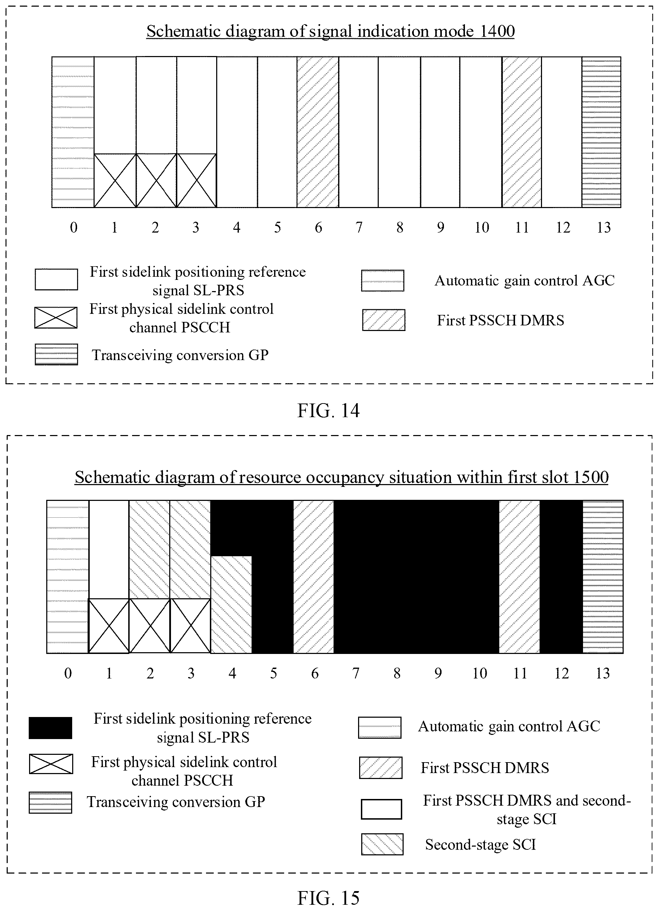

In some embodiments, on an OFDM symbol in which the first PSSCH DMRS indicated by a DMRS pattern field of the first PSCCH is located, a sequence and positions of occupied resource elements (REs) positions of a first SL-PRS transmitted by the target terminal should be the same as that of a first PSSCH DMRS to be transmitted on the OFDM symbol, so that other terminals using the second resource pool may perform channel listening according to the first PSSCH DMRS transmitted by the target terminal. Schematically, referring to FIG. 14, a schematic diagram of a signal indication mode provided by an exemplary embodiment of the present application is illustrated. As illustrated in FIG. 14, the first PSCCH indicates that the first PSSCH DMRS is transmitted on OFDM symbol # 6 and OFDM symbol #11, the first SL-PRS transmitted by the target terminal on the two OFDM symbols should be the same as the PSSCH DMRS to be transmitted on the two OFDM symbols.

In some embodiments, a modulation and coding scheme field of the first PSCCH is set as a target value, and the target value is used to indicate that the first slot is a slot used for transmitting the first sidelink positioning reference signal.

In the present embodiments, the modulation and coding scheme field is usually implemented as a specific bit field. If a signal currently transmitted within the first slot is the first SL-PRS, at least one specific bit field of the first PSCCH simultaneously transmitted within the first slot should be set to a specific value as the target value, to instruct the reference terminal to receive the first SL-PRS, for example, the "Modulation and Coding Scheme" field of the first PSCCH may be set to 30 or 31.

Optionally, the target terminal does not reserve resources in the transmitted first PSCCH, or the target terminal reserves one or more resources in the transmitted first PSCCH in a process of transmitting the first SL-PRS to the reference terminal, which will be described in detail in subsequent embodiments and will not be described here for the time being.

Indication manner two: the first SL-PRS is indicated by the first PSCCH or the second-stage SCI.

In some embodiments, the first sidelink positioning reference signal occupies a first slot, the first sidelink positioning reference signal, the first PSCCH and the second-stage sidelink control information (SCI) are transmitted within the first slot simultaneously, and the first PSCCH or the second-stage SCI is used to indicate that the first slot is a slot used for transmitting the first sidelink positioning reference signal.

Schematically, the first SL-PRS, the first PSCCH and the second-stage SCI being transmitted within the first slot simultaneously means that the first SL-PRS, the first PSSCH and the second-stage SCI are allowed to exist within the same slot, that is, the first slot, and when the reference terminal receives the first slot, the first SL-PRS, the first PSCCH and the second-stage SCI can all be received.

In some embodiments, within the first slot in which the first SL-PRS is transmitted, the target terminal transmits the first PSCCH, the first PSSCH and a first, where the second-stage SCI is carried on the first PSSCH.

The second-stage SCI may indicate at least one of information, such as, a source ID of the target terminal, a reference terminal ID of the first SL-PRS, a sequence ID of the first SL-PRS, a pattern (comb interval) of the first SL-PRS, or the like, that is, the second-stage SCI is used to indicate at least one of the following information: an ID of the target terminal; an ID of the reference terminal; a sequence ID of the first sidelink positioning reference signal; or a comb pattern of the first sidelink positioning reference signal.

A format of the first PSCCH (including a number of OFDM symbols, a number of PRBs, or the like occupied by the first PSCCH) is the same as configuration of the current second resource pool, and the signal transmitted within the current first slot may be indicated as the first SL-PRS in at least one of the following manners.

Indication manner A: a number of bits of the second-stage SCI is the same as that of one of SCI formats 2-A, 2-B and 2-C, and at least one specific bit field of the first PSCCH is set as a specific value, to indicate that the first SL-PRS is transmitted within the first slot. For example, a specific bit field of the first PSCCH is specified to be set to 1, that is, the number of bits of the second-stage SCI is the same as that of one of the SCI formats 2-A, 2-B and 2-C, a first bit in a first bit field of the first PSCCH is set as a first value, and the first value is used to indicate that the first slot is a slot used for transmitting the first sidelink positioning reference signal.

Indication manner B: a number of bits of the second-stage SCI is the same as that of one of SCI formats 2-A, 2-B and 2-C, and one or more information fields are set as a specific value, to indicate that the first SL-PRS is transmitted within the current first slot. For example, "HARQ process number", "New data indicator" and "Redundancy version" of the second-stage SCI are all set to 1 or all set to 0, to indicate that the first SL-PRS is transmitted within the current first slot, that is, the number of bits of the second-stage SCI is the same as that of one of the SCI formats 2-A, 2-B and 2-C, a second bit in a second bit field of the second-stage SCI is set as a second value, and the second value is used to indicate that the first slot is a slot used for transmitting the first sidelink positioning reference signal.

Indication manner C: a number of bits of the second-stage SCI may be different from that of any one of SCI formats 2-A, 2-B and 2-C, and "2nd-stage SCI format" field of the first PSCCH is set to 11, which is used to indicate that a signal transmitted within the current first slot is the first SL-PRS, that is, the number of bits of the second-stage SCI is different from that of any one of the SCI formats 2-A, 2-B and 2-C, third bits in a third bit field of the first PSCCH are set as a third value, and the third value is used to indicate that the first slot is a slot used for transmitting the first sidelink positioning reference signal.

It is worth noting that the above indication manners in which the first PSCCH or the second-stage SCI indicates that the first slot is the slot used for transmitting the first SL-PRS are merely schematic examples, which are not limited by the embodiments of the present application.

In some embodiments, the target terminal should transmit the first SL-PRS within time-frequency resources of the first slot indicated by the first PSCCH, and the resources used for transmitting the first SL-PRS do not overlap with the resources used for transmitting the first PSCCH and the second-stage SCI.

Schematically, referring to FIG. 15, a schematic diagram of a resource occupancy situation within a first slot provided by an exemplary embodiment of the present application is illustrated. As illustrated in FIG. 15, on an first OFDM symbol of the current first slot, information transmitted by the target terminal is the same as that transmitted on a second OFDM symbol, that is, this is for AGC adjustment; on a last OFDM symbol of the current first slot, the target terminal does not transmit any information, that is, this is for transceiving conversion (GP); and on other OFDM symbols, the first SL-PRS is transmitted on resources other than those occupied by the first PSCCH and the second-stage SCI. Similarly to the indication manner one, on an OFDM symbol in which the first PSSCH DMRS indicated by a "DMRS Pattern" field of the first PSCCH is located, a sequence and occupied REs positions of first SL-PRS transmitted by the target terminal should be the same as the first PSSCH DMRS to be transmitted on the OFDM symbol.

Optionally, the target terminal does not reserve resources in the transmitted first PSCCH, or the target terminal reserves one or more resources in the transmitted first PSCCH in a process of transmitting the first SL-PRS to the reference terminal, which will be described in detail in subsequent embodiments and will not be described here for the time being.

Step 1120: feedback information of the first sidelink positioning reference signal transmitted by the reference terminal is received.

Schematically, the feedback information of the first SL-PRS includes a second SL-PRS and a transceiving time difference.

In some embodiments, the reference terminal may determine a transmission resource of the feedback information of the first SL-PRS according to the transmission resource acquiring manner one or the transmission resource acquiring manner two, for transmitting the feedback information of the first SL-PRS.

In some embodiments, in a case where the target terminal does not reserve resources in the transmitted first PSCCH, if the reference terminal determines the transmission resource of the feedback information of the first SL-PRS according to the transmission resource acquiring manner two, the reference terminal is required to select the transmission resource of the feedback information of the first SL-PRS from a resource pool preconfigured by the network device by means of channel listening.

In some embodiments, in a case where the target terminal reserves one or more resources in the transmitted first PSCCH, the target terminal may receive the feedback information of the first SL-PRS transmitted by the reference terminal on at least one of the one or more resources.

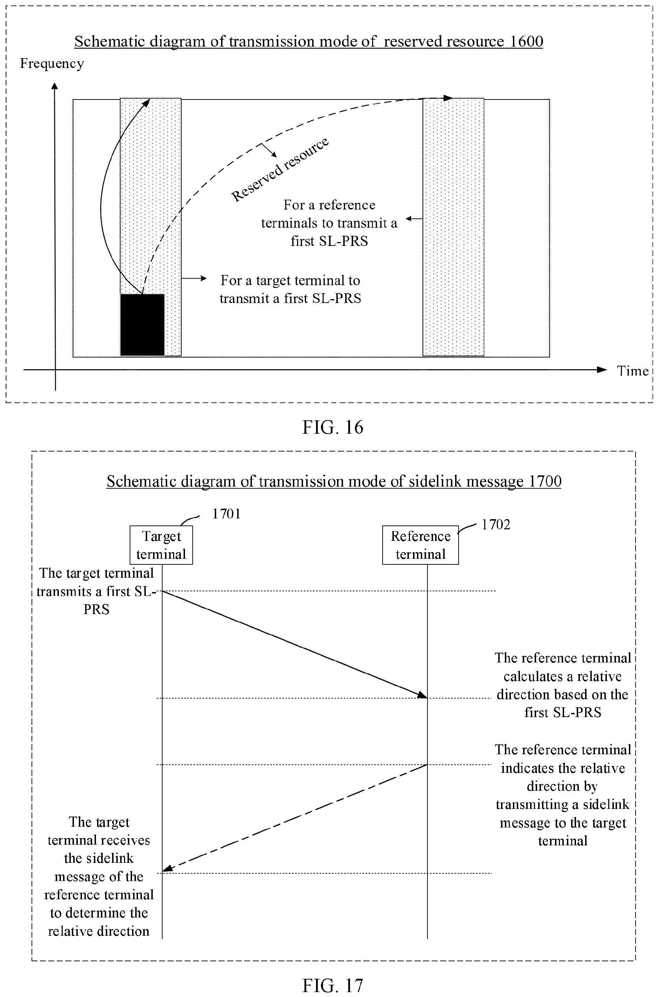

Schematically, as illustrated in FIG. 16, a schematic diagram of a transmission mode of a reserved resource provided by an exemplary embodiment of the present application is illustrated. As illustrated in FIG. 16, when the target terminal transmits the first SL-PRS to the reference terminal, the first PSCCH transmitted simultaneously with the first SL-PRS reserves one resource, and then the reference terminal may transmit feedback information of the first SL-PRS to the target terminal on the resource.

Optionally, if the reference terminal transmits the feedback information of the first SL-PRS on the resource reserved by the target terminal, the resource is required to meet resource selection conditions based on resource listening, where the resource selection conditions include that the reserved resource provided by the current target terminal does not overlap with resources reserved when other terminals transmit PSCCHs; or the resource currently reserved by the target terminal is not occupied by other terminals.

Optionally, if the resource of the feedback information of the first SL-PRS transmitted by the reference terminal is independently selected by the reference terminal after the target terminal transmits the first SL-PRS to the reference terminal, when the reference terminal transmits the feedback information of the first SL-PRS, a "Destination ID" field of the second-stage SCI transmitted simultaneously with the feedback information of the first SL-PRS should be set as an ID of the target terminal, and the ID of the target terminal may be determined according to at least one of: a source ID (including a source ID of the target terminal) or a sequence ID of the first SL-PRS transmitted by the target terminal, and they are indicated in the second-stage SCI transmitted simultaneously with the first SL-PRS transmitted by the target terminal.

Step 1130: a relative positioning result of the target terminal relative to the reference terminal is determined based on the feedback information of the first sidelink positioning reference signal.

In some embodiments, a relative distance of the target terminal relative to the reference terminal is calculated based on a second sidelink positioning reference signal and a transceiving time difference; and/or a relative direction of the target terminal relative to the reference terminal is calculated based on an angle of arrival of the second sidelink positioning reference signal.

Schematically, when the target terminal receives the second SL-PRS of the reference terminal and the transceiving time difference, the relative distance between the target terminal and the reference terminal may be estimated according to the relationships between the transmission of the first SL-PRS, the reception of the second SL-PRS and the transceiving time difference.

Schematically, when the target terminal is equipped with an array antenna, and the reference terminal is equipped with a single antenna, the angle of arrival of the second SL-PRS may be obtained according to the second manner of calculating the AOA, thereby calculating the relative direction of the target terminal relative to the reference terminal.

In summary, in the method provided by the present embodiments, by using a flexible positioning method of a relative position in the sidelink communication, sidelink-based relative positioning can be realized in different ways, and the accuracy of the sidelink-based relative positioning can be improved.

Embodiment two: for a case where, in feedback information of a first SL-PRS, a reference terminal calculates an angle of arrival using AOA to obtain a relative direction/relative distance.

Schematically, referring to FIG. 17, a schematic diagram of a transmission mode of a sidelink message provided by an exemplary embodiment of the present application is illustrated. As illustrated in FIG. 17, a target terminal 1701 transmits a first SL-PRS to a reference terminal 1702, and the reference terminal 1702 calculates a signal angle of arrival corresponding to the first SL-PRS according to the received first SL-PRS, so as to obtain a relative direction of the target terminal 1701 relative to the reference terminal 1702, takes the relative direction as feedback information of the first SL-PRS, and transmits the feedback information of the first SL-PRS by means of transmitting a sidelink message to the target terminal 1701.

Schematically, before the target terminal transmits the first SL-PRS to the reference terminal, it is necessary to select a transmission resource for transmitting the SL-PRS, where acquiring manners of the transmission resource of the SL-PRS includes the transmission resource acquiring manner one or the transmission resource acquiring manner two, which will not described repeatedly here. That is, a transmission resource of the first sidelink positioning reference signal scheduled by the network device is received, the transmission resource of the first sidelink positioning reference signal is selected by the network device from a first resource pool, and the first resource pool is a resource pool that supports a first transmission mode of a sidelink; or a transmission resource of the first sidelink positioning reference signal is selected from a second resource pool; where the second resource pool is a resource pool that supports a second transmission mode of a sidelink.

In some embodiments, if the second resource pool used for transmitting the first SL-PRS and a resource pool of the second mode resource selection overlap, the target terminal may select the transmission resource used for transmitting the first SL-PRS according to the second mode resource listening.

Step 1110: the first sidelink positioning reference signal is transmitted to the reference terminal.

Optionally, the target terminal does not reserve resources in the transmitted first PSCCH, or the target terminal reserves one or more resources in the transmitted first PSCCH in a process of transmitting the first SL-PRS to the reference terminal, for subsequently receiving the feedback information of the first SL-PRS transmitted by the reference terminal on the resources.

In some embodiments, the first sidelink positioning reference signal occupies a first slot; the first sidelink positioning reference signal and a first PSCCH are transmitted within the first slot simultaneously, or a first PSCCH is transmitted earlier than the first sidelink positioning reference signal; where the first PSCCH is used to indicate a transmission resource and a retransmission resource of the first sidelink positioning reference signal.

In some embodiments, in a case where the target terminal transmits the first SL-PRS according to the indication manner one, that is, in a case where the first SL-PRS is indicated by the first PSCCH, the target terminal may reserve a resource for first SL-PRS retransmission, that is, the target terminal supports sidelink hybrid automatic repeat request (HARQ) feedback; or the target terminal may not reserve the resource for the first SL-PRS retransmission.

In a case where the target terminal does not reserve a retransmission resource for the first SL-PRS, first control information transmitted by the target terminal to the reference terminal only includes the first SL-PRS, and the target terminal may occupy OFDM symbols in the entire first slot to transmit the first SL-PRS, or only occupy a part of the OFDM symbols.

In some embodiments, in a case where the target terminal transmits the first SL-PRS according to the indication manner two, that is, in a case where the first SL-PRS is indicated by the first PSCCH and/or the second-stage SCI, the target terminal may reserve a resource for the first SL-PRS retransmission, or may not reserve the resource for the first SL-PRS retransmission.

In a case where the target terminal reserves a retransmission resource of the first SL-PRS, the target terminal transmits the first PSCCH for indicating the transmission resource of the current first SL-PRS and the retransmission resource of the first SL-PRS, or transmits the first PSSCH for indicating at least one of the transmission resource of the current first SL-PRS or the retransmission resource for the first SL-PRS, that is, first control information transmitted by the target terminal to the reference terminal includes the first SL-PRS, the first PSCCH and/or the first PSSCH, where the second-stage SCI is carried on the first PSSCH.

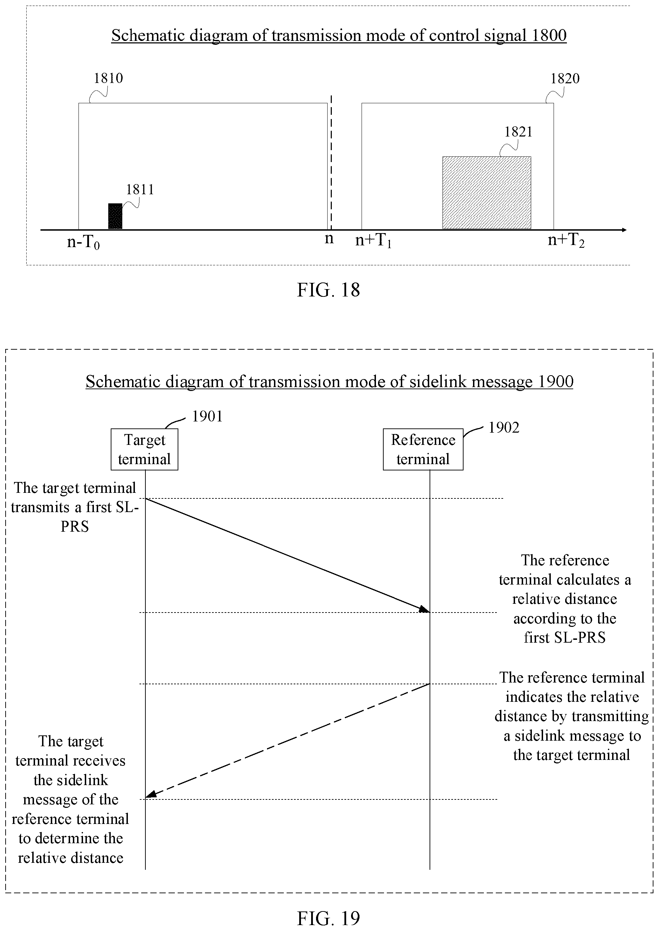

The target terminal transmits the first PSCCH and/or the first PSSCH and the first SL-PRS within the first slot, to realize simultaneous transmission of the first PSCCH and/or the first PSCCH and the first SL-PRS. Alternatively, the target terminal transmits the first PSCCH and/or the first PSSCH before the first slot occupied by transmitting the first SL-PRS, that is, the slot occupied by the first PSCCH and/or the first PSSCH is earlier than that occupied by the first SL-PRS. Schematically, referring to FIG. 18, a schematic diagram of a transmission mode of a control signal provided by an exemplary embodiment of the present application is illustrated. As illustrated in FIG. 18, a slot 1810 is a slot with a time interval of $\{n-T_0, n\}$, and a slot 1820 is a slot with a time interval of $\{n+T_1, n+T_2\}$. At present, the slot 1810 is occupied by the target terminal to transmit a first PSCCH 1811 to the reference terminal, and the slot 1820 is occupied to transmit a first SL-PRS1821. As such, the slot occupied by the first PSCCH1811 is earlier than that occupied by the first SL-PRS, that is, the first PSCCH is transmitted earlier than the first SL-PRS. The manner of the first PSSCH is consistent with that of the first PSCCH, which will not be repeated described here.

Step 1120: feedback information of the first sidelink positioning reference signal transmitted by the reference terminal is received.

In some embodiments, the feedback information of the first sidelink positioning reference signal is carried in a sidelink message.

Optionally, the feedback information of the first SL-PRS includes at least one of: the feedback information of the first SL-PRS includes a relative direction of the target terminal relative to the reference terminal, alternatively, the feedback information of the first SL-PRS includes a signal transmit power of the reference terminal, alternatively, the feedback information of the first SL-PRS includes a transceiving time difference.

Schematically, the relative direction in the feedback information is obtained by manners of calculating the AOA, where the reference terminal is equipped with an array antenna, and the target terminal is equipped with a single antenna.

In some embodiments, the feedback information and the second-stage SCI are transmitted simultaneously, and the second-stage SCI indicates a sequence ID of the first sidelink positioning reference signal.

Schematically, when the reference terminal transmits the sidelink message to the target terminal, it is indicated that a "Destination ID" of the second-stage SCI transmitted by the second PSSCH carrying the information should be related to the sequence ID of the first SL-PRS of the target terminal, for example, a value of the "Destination ID" field of the second-stage SCI is set as the sequence ID of the first SL-PRS transmitted by the target terminal, that is, the feedback information and the second-stage SCI are transmitted simultaneously, and the second-stage SCI indicates the sequence ID of the first sidelink positioning reference signal.

Optionally, the reference terminal transmits the feedback information of the first SL-PRS on the resource reserved by the target terminal. Alternatively, the resource on which the reference terminal transmits the feedback information of the first SL-PRS is independently selected by the reference terminal.

Step 1130: a relative positioning result of the target terminal relative to the reference terminal is determined based on the feedback information of the first sidelink positioning reference signal.

Optionally, after receiving the feedback information of the first SL-PRS, the target terminal takes the relative direction included in the first SL-PRS as the relative positioning result. Alternatively, the target terminal receives the feedback information of the first SL-PRS, the feedback information includes the relative direction and the corresponding transmit power, the target terminal estimates a signal received power according to the transmit power, so as to determine a relative distance of target terminal relative to the reference terminal, and takes the relative distance and the relative direction as the relative positioning result. Alternatively, the target terminal records a transmission timing of transmitting the first SL-PRS and a reception timing of receiving the feedback information of the first SL-PRS, the reference terminal records a transmission timing of receiving the first SL-PRS, and transmits the relative direction and the transceiving time difference when transmitting the feedback information of the first SL-PRS, where the transceiving time difference refers to a time difference between the reception timing of receiving the first SL-PRS and the transmission timing of transmitting the feedback information of the first SL-PRS, and the target terminal calculates the relative distance according to the transceiving time difference, and takes the relative direction and the relative distance as the relative positioning result. That is, in the embodiments provided by the present application, the relative distance of the target terminal relative to the reference terminal may be obtained according to the first manner of determining the relative distance or the second manner of determining the relative distance.

In summary, in the method provided by the present embodiments, by using a flexible positioning method of a relative position in the sidelink communication, sidelink-based relative positioning can be realized in different ways, and the accuracy of the sidelink-based relative positioning can be improved.

Embodiment three: for a case where, in feedback information of a first SL-PRS, a reference terminal uses a signal received power to calculate a relative direction/relative distance.

Schematically, referring to FIG. 19, a schematic diagram of a transmission mode of a sidelink message provided by an exemplary embodiment of the present application is illustrated. As illustrated in FIG. 19, a target terminal 1901 transmits a first SL-PRS to a reference terminal 1902, the first SL-PRS indicates a transmit power, and the reference terminal 1902 calculates a signal received power according to the received first SL-PRS, so as to determine a relative distance between a target terminal and a reference terminal, and takes the relative distance as the feedback information of the first SL-PRS, and transmits the feedback information of the first SL-PRS by means of transmitting a sidelink message to the target terminal 1901.

Schematically, before the target terminal transmits the first SL-PRS to the reference terminal, it is necessary to select a transmission resource for transmitting the SL-PRS, where and the acquiring manner of the transmission resource of the SL-PRS includes the transmission resource acquiring manner one or the transmission resource acquiring manner two, which will not described repeatedly here. That is, a transmission resource of the first sidelink positioning reference signal scheduled by the network device is received, the transmission resource of the first sidelink positioning reference signal is selected by the network device from a first resource pool, and the first resource pool is a resource pool that supports a first transmission mode of a sidelink; or a transmission resource of the first sidelink positioning reference signal is selected from a second resource pool; where the second resource pool is a resource pool that supports a second transmission mode of a sidelink.

In some embodiments, if the second resource pool used for transmitting the first SL-PRS and a resource pool of the second mode resource selection overlap, the target terminal may select the transmission resource used for transmitting the first SL-PRS according to the second mode resource listening.

Step 1110: the first sidelink positioning reference signal is transmitted to the reference terminal.

Optionally, the target terminal does not reserve resources in the transmitted first PSCCH, or the target terminal reserves one or more resources in the transmitted first PSCCH in a process of transmitting the first SL-PRS to the reference terminal, for subsequently receiving the feedback information of the first SL-PRS transmitted by the reference terminal on the resources.

In some embodiments, the first sidelink positioning reference signal occupies a first slot; the first sidelink positioning reference signal and a first PSCCH are transmitted within a first slot simultaneously, or a first PSCCH is transmitted earlier than the first sidelink positioning reference signal; where the first PSCCH is used to indicate a transmission resource and a retransmission resource of the first sidelink positioning reference signal.

Step 1120: feedback information of the first sidelink positioning reference signal transmitted by the reference terminal is received.

In some embodiments, the feedback information of the first sidelink positioning reference signal is carried in a sidelink message.

Schematically, the first SL-PRS includes a relative distance between the target terminal and the reference terminal, where the relative distance is calculated by the reference terminal according to the signal power of the first SL-PRS.

In some embodiments, the first sidelink positioning reference signal is a demodulation reference signal of a first PSCCH and/or a first PSSCH; the first sidelink positioning reference signal and the first PSSCH are transmitted simultaneously, and a medium access control control element (MAC CE) of the first PSSCH indicates a signal transmit power of the demodulation reference signal; and the first sidelink positioning reference signal and a second-stage SCI are transmitted simultaneously, and the second-stage SCI indicates the signal transmit power of the demodulation reference signal.

Schematically, the first SL-PRS is the demodulation reference signal of the first PSCCH and/or the first PSSCH transmitted by the target terminal, and the target terminal should indicate a transmit power of the demodulation reference signal of the first PSCCH and/or first PSSCH. For example, the target terminal may indicate the transmit power of the demodulation reference signal of the first PSCCH and/or first PSSCH through the medium access control control element (MAC CE) carried on the first PSSCH, or may indicate the transmit power of the demodulation reference signal of the first PSCCH and/or first PSSCH through the second-stage SCI.

Optionally, the reference terminal transmits the feedback information of the first SL-PRS on a resource reserved by the target terminal. Alternatively, a resource on which the reference terminal transmits the feedback information of the first SL-PRS is independently selected by the reference terminal.

Step 1130: a relative positioning result of the target terminal relative to the reference terminal is determined based on the feedback information of the first sidelink positioning reference signal.

Optionally, after receiving the feedback information of the first SL-PRS, the target terminal takes the relative distance included in the first SL-PRS as the relative positioning result. Alternatively, after receiving the feedback information of the first SL-PRS, the target terminal determines, according to the feedback information, a relative direction of the target terminal relative to the reference terminal by the second manner of calculating the AOA, where the target terminal is equipped with an array antenna, and the reference terminal is equipped with an single antenna, and takes the relative direction and the relative distance in the feedback information of the first SL-PRS as the relative positioning result.

In summary, in the method provided by the present embodiments, by using a flexible positioning method of a relative position in the sidelink communication, sidelink-based relative positioning can be realized in different ways, and the accuracy of the sidelink-based relative positioning can be improved.

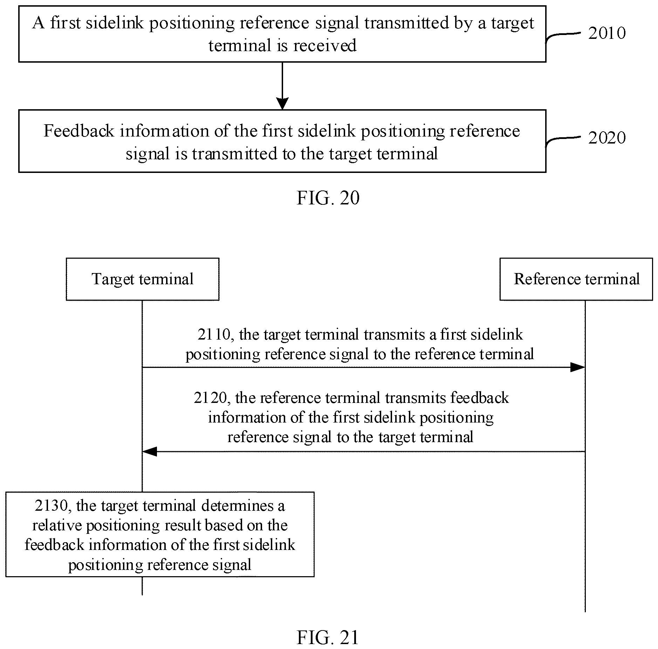

FIG. 20 illustrates a flowchart of a positioning method of a relative position provided by an exemplary embodiment of the present application. The present embodiment is illustrated by taking an example of the method being applied to a reference terminal, and the method includes at least part of the following steps.

Step 2010: a first sidelink positioning reference signal transmitted by a target terminal is received.

The first sidelink positioning reference signal (SL-PRS) is an SL-PRS associated with a PSCCH and/or a PSSCH, that is, the target terminal is required to transmit the first SL-PRS according to an indication of the PSCCH and/or PSSCH, and a second type of SL-PRS transmitted by a terminal may be used to support relative positioning. The relative positioning refers to that an offset value relative to a reference position is obtained by positioning, and the reference position is its own original position or a position of a certain reference point.

In some embodiments, the reference terminal is in a sidelink communication scenario of unicast, or in a sidelink communication scenario of multicast, or in a sidelink communication scenario of broadcast.

Optionally, the reference terminal and the target terminal are in sidelink communication within network coverage, or sidelink communication within partial network coverage, or in sidelink communication outside network coverage. In the sidelink communication within partial network coverage, any one of the target terminal or the reference terminal is within a coverage range of a base station.

Optionally, the reference terminal is equipped with a single antenna, and receives the first SL-PRS through the single antenna. Alternatively, the reference terminal is equipped with an array antenna which includes multiple groups of antennas arranged in a certain manner, and receives the first SL-PRS through multiple groups of antennas.

Optionally, the reference terminal receives the first SL-PRS according to a target period, that is, continuously receives the first SL-PRS according to a specified time interval. Alternatively, the reference terminal receives the first SL-PRS only once at a time.

Step 2020: feedback information of the first sidelink positioning reference signal is transmitted to the target terminal.

The feedback information of the first sidelink positioning reference signal is used to determine a relative positioning result of the target terminal relative to the reference terminal.

Schematically, the feedback information of the first SL-PRS includes signal data transmitted by the reference terminal to the target terminal after receiving the first SL-PRS transmitted by the target terminal, which is taken as the feedback information of the first SL-PRS.

In some embodiments, the feedback information of the first SL-PRS includes a second sidelink positioning reference signal (SL-PRS) and a transceiving time difference, and the transceiving time difference is used for indicating a time difference between a reception end time of the first sidelink positioning reference signal and a transmission start time of the second sidelink positioning reference signal.

Optionally, the first SL-PRS and the second SL-PRS belong to a same SL-PRS; or the first SL-PRS and the second SL-PRS belong to different SL-PRSs.

Optionally, the first SL-PRS and the second SL-PRS may be distinguished by different resources, and the resources include at least one resources in: a time domain, a frequency domain or a code domain, for example, the first SL-PRS and the second SL-PRS are transmitted in different resource pools configured or preconfigured by the base station, or transmitted on different time-frequency resources in the same resource pool, or transmitted on the same time-frequency resource in the same resource pool through different sequences (i.e., different code domain resources), respectively. That is, transmission resources used by the first SL-PRS and the second SL-PRS are different, or resource pools corresponding to the first SL-PRS and the second SL-PRS are different.

In some embodiments, the feedback information of the first SL-PRS includes at least one of a relative direction or a relative distance of the target terminal relative to the reference terminal.

Both the relative direction and the relative distance are transmitted to the target terminal by means of a sidelink message.

Optionally, in a case where the reference terminal is equipped with the single antenna, the feedback information of the first SL-PRS is transmitted to the target terminal through the single antenna. Alternatively, the reference terminal is equipped with the array antenna which includes the multiple groups of antennas arranged in a certain manner, and transmits the feedback information of the first SL-PRS to the target terminal through the multiple groups of antennas.

Schematically, the relative positioning result includes at least one of the relative direction and the relative distance of the target terminal relative to the reference terminal.

Schematically, in a case where the relative positioning result includes the relative direction, the relative direction of the target terminal relative to the reference terminal is determined by means of calculating an angle of arrival (AOA). In a process of calculating the AOA, the calculating manner of the AOA includes at least one of the following two manners.

First manner of calculating the AOA

The target terminal is equipped with a single antenna, and the reference terminal is equipped with an array antenna. The target terminal transmits the first SL-PRS to the reference terminal through the single antenna, and when a transmission signal corresponding to the first SL-PRS passes through the array antenna of the reference terminal, the reference terminal collects the signal of the first SL-PRS and then calculates the angle of arrival of the signal corresponding to the first SL-PRS, so as to obtain a relative angle between the target terminal and the reference terminal. The relative angle is transmitted to the target terminal as the feedback information of the first SL-PRS in a form of a sidelink message, that is, the relative angle is taken as the relative positioning result.

Second manner of calculating the AOA

The target terminal is equipped with an array antenna, and the reference terminal is equipped with a single antenna. After the target terminal transmits the first SL-PRS to the reference terminal through the array antenna, and the reference terminal transmits the feedback information of the first SL-PRS to the target terminal through the single antenna, when a transmission signal corresponding to the feedback information of the first SL-PRS passes through the array antenna of the target terminal, the target terminal collects the signal corresponding to the feedback information of the first SL-PRS and then calculates the angle of arrival of the signal of the feedback information of the first SL-PRS, to obtain a relative angle between the reference terminal and the target terminal, and takes the relative angle as the relative positioning result.

Schematically, in a case where the relative positioning result includes the relative distance, the relative positioning result is determined by means of the transceiving time difference or a signal received strength.

First manner of determining the relative distance

In a case where the feedback information of the first SL-PRS received by the target terminal includes the second SL-PRS and the transceiving time difference, the relative distance between the target terminal and the reference terminal is determined according to the second SL-PRS and the transceiving time difference. For example, relative distance = $(T_4-T_1-T_d)/2*V$. Here, $T_4$ is a reception end timing of the second SL-PRS, $T_1$ is a transmission start timing of the first SL-PRS, $T_d$ is the transceiving time difference, and V is a transmission speed of an electromagnetic wave.

Second manner of determining the relative distance

In a case where the reference terminal receives a signal received power of the first SL-PRS, the reference terminal calculates the relative distance between the reference terminal and the target terminal through the signal received power, and transmits the relative distance to the target terminal in a manner of a sidelink message. The target terminal takes the relative distance as the relative positioning result after receiving the sidelink message. For example, the relative distance is equal to a difference between a signal transmit power and a signal received power divided by a rate at which signal decays with distance, i.e., relative distance = (signal transmit power - signal received power)/rate at which the signal decays with distance.

In some embodiments, the above transmission methods may be used alone or in combination.

In the embodiments of the present application, the first manner of determining the relative distance may be combined with the first manner of calculating the AOA. Alternatively, the first manner of determining the relative distance may be combined with the first manner of calculating the AOA and the second manner of calculating the AOA, and the present application is not limited thereto.

In summary, in the methods provided by the present embodiments, by using a flexible positioning method of a relative position in the sidelink communication, sidelink-based relative positioning can be realized in different ways, and the accuracy of the sidelink-based relative positioning can be improved.

A positioning method of a relative position will be described below for a case where a relative positioning result includes at least one of a relative position or a relative direction of a target terminal and a reference terminal.

Embodiment one: for a case where feedback information of a first SL-PRS includes a second SL-PRS and a transceiving time difference.

Step 2010: a first sidelink positioning reference signal transmitted by a target terminal is received.

Schematically, the first SL-PRS transmitted by the target terminal is received at a first reception time.

Optionally, there is no reserved resource set by the target terminal in a first PSCCH received by the reference terminal, or there are one or more resources reserved by the target terminal in the first PSCCH received by the reference terminal.

Step 2020: feedback information of the first sidelink positioning reference signal is transmitted to the target terminal.

The feedback information of the first sidelink positioning reference signal is used to determine a relative positioning result of the target terminal relative to the reference terminal.

In some embodiments, the feedback information of the first sidelink positioning reference signal is carried in a sidelink message.

In some embodiments, the feedback information of the first SL-PRS includes a second SL-PRS and the transceiving time difference. After receiving the first SL-PRS, the reference terminal determines the second SL-PRS to be transmitted, and determines the transceiving time difference according to the first reception time of the first SL-PRS and a second transmission time of the second SL-PRS to be transmitted, and transmits the second SL-PRS and the transceiving time difference to the target terminal as the feedback information of the first SL-PRS.

Schematically, before the reference terminal transmits the feedback information of the first SL-PRS to the target terminal, it is necessary to select a transmission resource for transmitting the feedback information. Where acquiring manners of the transmission resource of the feedback information includes the following two manners.

Transmission resource acquiring manner one: the first SL-PRS transmitted by the reference terminal on a sidelink is transmitted by a transmission resource allocated by a network device.

In some embodiments, a transmission resource of the feedback information of the first sidelink positioning signal scheduled by the network device is received, the transmission resource of the feedback information of the first sidelink positioning signal is selected by the network device from a third resource pool, and the third resource pool is a resource pool that supports a first transmission mode of the sidelink.

Schematically, the first transmission mode corresponds to the first mode of resource transmission in the sidelink, and the transmission resource of the feedback resource of selected by the reference terminal is a resource that the network device instructs the reference terminal to perform transmission by selecting a specified transmission resource in the third resource pool.

Transmission resource acquiring manner two: the feedback resource transmitted by the reference terminal on the sidelink is a transmission resource independently selected by the reference terminal in a resource pool.

In some embodiments, the transmission resource of the first sidelink positioning reference signal is selected from a fourth resource pool; and the fourth resource pool is a resource pool that supports a second transmission mode of the sidelink.

For the transmission resource acquiring manner two, the fourth resource pool includes multiple transmission resources, including those are applicable to the reference terminal for performing resource transmission and those are not applicable to the reference terminal for performing resource transmission. Therefore, the reference terminal is required to independently select the transmission resource for transmitting the feedback information from the fourth resource pool, and thus, a mode of which the reference terminal transmits the resource corresponds to the second mode of the sidelink.

Optionally, the fourth resource pool and a resource pool of the second mode correspond to the same resource pool, that is, the fourth resource pool is a resource pool preconfigured by the network device. Alternatively, the fourth resource pool overlaps with the resource pool of the second mode, that is, the fourth resource pool includes some resources preconfigured by the network device. Alternatively, the fourth resource pool is a resource pool separately configured for the target terminal, and does not overlap with the resource pool of the second mode.

Schematically, in a case where the fourth resource pool is the same as or overlaps with the resource pool of the second mode, the target terminal independently selects the transmission resource for transmitting the first SL-PRS from the fourth resource pool, and thus, a resource transmission manner of the target terminal corresponds to the resource transmission manner under the second mode of the sidelink.

Optionally, in a case where the reference terminal performs resource transmission by the second mode, the reference terminal may select the transmission resource from the fourth resource pool by means of listening, or may select the transmission resource from the fourth resource pool by means of random selection.

Transmission resource acquiring manner three: the reference terminal acquires a reserved resource of the target terminal as a transmission resource for transmitting the feedback information of the first SL-PRS.

In some embodiments, in the transmission resource acquiring manners one and two, the target terminal does not reserve resources in the first SL-PRS, however in the transmission resource acquiring manner three, the target terminal reserves one or more resources in the first SL-PRS, that is, in a case where a first PSCCH indicates at least one reserved resource, the transmission resource of the feedback information of the first sidelink positioning reference signal belongs to the reserved resource.

Schematically, if the reference terminal transmits the feedback information of the first SL-PRS on the resource reserved by the target terminal, the resource is required to meet resource selection conditions based on resource listening, where the resource selection conditions include that the reserved resource provided by the current target terminal does not overlap with resources reserved when another terminals transmit PSCCHs; or the resource currently reserved by the target terminal is not occupied by other terminals.

Schematically, in a case where the reference terminal selects a resource from the fourth resource pool by the second mode to transmit the feedback information of the first SL-PRS to the target terminal, it is necessary to determine an indication mode of the feedback information of the first SL-PRS.

In some embodiments, the feedback information of the first SL-PRS transmitted to the target terminal is indicated by a second PSCCH, that is, the reference terminal simultaneously transmits the feedback information of the first SL-PRS and the second PSCCH within a transmission slot of the feedback information of the first SL-PRS. Alternatively, the feedback information of the first SL-PRS is indicated by the second PSCCH or second-stage sidelink control information (SCI), that is, the feedback information of the first SL-PRS, the second PSCCH or the second PSSCH are simultaneously transmitted within the transmission slot of the second SL-PRS, and the second-stage SCI is carried by the second PSSCH.

The above two indication manners will be specifically described below.

Indication manner one: the feedback information of the first SL-PRS is indicated by the second PSCCH.

In some embodiments, the feedback information of the first sidelink positioning reference signal occupies a second slot, the feedback information of the first sidelink positioning reference signal and the second physical sidelink control channel (PSCCH) are simultaneously transmitted within the second slot, and the second PSCCH is used to indicate that the second slot is a slot used for transmitting the feedback information of the first sidelink positioning reference signal.

Schematically, the feedback information of the first SL-PRS transmitted by the reference terminal is indicated by the second PSCCH, that is, only the feedback information of the first SL-PRS and the second PSCCH are transmitted within the second slot occupied by the feedback information of the first SL-PRS transmitted by the reference terminal.

A format of the second PSCCH includes a number of orthogonal frequency division multiplexing (OFDM) symbols, a number of physical resource blocks (PRBs), or the like occupied by the second PSCCH.

The format of the second PSCCH and configuration of the fourth resource pool are the same. On an OFDM symbol in which the second PSCCH is located, the feedback information of the first SL-PRS is transmitted on frequency domain resources indicated by the second PSCCH except the frequency domain resources occupied by the second PSCCH, that is, the frequency domain resources occupied by the feedback information of the first SL-PRS do not overlap with the frequency domain resources occupied by the second PSCCH.

In some embodiments, on an OFDM symbol in which the second PSSCH DMRS indicated by a DMRS pattern field of the second PSCCH is located, a sequence and positions of occupied resource elements (REs) of the feedback information of the first SL-PRS transmitted by the reference terminal should be the same as that of a second PSSCH DMRS to be transmitted on the OFDM symbol, so that other terminals using the fourth resource pool may perform channel listening according to the second PSSCH DMRS transmitted by the reference terminal.

In some embodiments, a modulation and coding mode scheme field of the second PSCCH is set as a target value, and the target value is used to indicate that the second slot is a slot used for transmitting feedback information of the first sidelink positioning reference signal.

In the present embodiments, the modulation and coding scheme field is usually implemented as a specific bit field. If a signal currently transmitted within the second slot is the feedback information of the first SL-PRS, at least one specific bit field of the second PSCCH simultaneously transmitted within the second slot should be set as a specific value as the target value, to instruct the reference terminal to transmit the feedback information of the first SL-PRS, for example, the "Modulation and Coding Scheme" field of the second PSCCH may be set to 30 or 31.

Indication manner two: the feedback information of the first SL-PRS is indicated by the second PSCCH or the second-stage SCI.

In some embodiments, the feedback information of the first sidelink positioning reference signal occupies a second slot, the feedback information of the first sidelink positioning reference signal, the second PSCCH and the second-stage sidelink link control information (SCI) are transmitted within the second slot simultaneously, and the second PSCCH or the second-stage SCI is used to indicate that the second slot is a slot used for transmitting the feedback information of the first sidelink positioning reference signal.

Schematically, the feedback information of the first SL-PRS, the second PSSCH and the second-stage SCI being transmitted within the second slot simultaneously means that the feedback information of the first SL-PRS, the second PSSCH and the second-stage SCI are allowed to exist within the same slot, that is, the second slot, and when the target terminal reaches the second slot, the feedback information of the first SL-PRS, the second PSSCH and the second-stage SCI can be simultaneously received.

In some embodiments, within the second slot in which the feedback information of the first SL-PRS is transmitted, the reference terminal transmits the second PSCCH and/or the second PSSCH, where the second-stage SCI is carried on the second PSSCH.

The second-stage SCI may indicate at least one of information, such as, a source ID of the target terminal, an ID of the reference terminal, a sequence ID of a second SL-PRS, a pattern (comb interval) of the second SL-PRS, or the like, that is, the second-stage SCI is used to indicate at least one of the following information: an ID of the target terminal; an ID of the reference terminal; a sequence ID of the second sidelink positioning reference signal; or a comb pattern of the second sidelink positioning reference signal.

Optionally, if the resource of the feedback information of the first SL-PRS transmitted by the reference terminal is independently selected by the reference terminal after the target terminal transmits the first SL-PRS to the reference terminal and does not reserve any resource, when the reference terminal transmits the feedback information of the first SL-PRS, a "Destination ID" field of the second-stage SCI transmitted simultaneously with the feedback information of the feedback information of the first SL-PRS should be set as an ID of the target terminal, and the ID of the target terminal may be determined according to at least one of: a source ID (including a source ID of the target terminal) or a sequence ID of the feedback information of the first SL-PRS transmitted by the target terminal, and they are indicated in the second-stage SCI transmitted simultaneously with the feedback information of the first SL-PRS transmitted by the target terminal.

A format of the second PSCCH (including a number of OFDM symbols, a number of PRBs, or the like occupied by the second PSCCH) is the same as configuration of the current fourth resource pool, and the signal transmitted within the current second slot may be indicated as the feedback information of the first SL-PRS by at least one of the following manners.

Indication manner A: a number of bits of the second stage SCI is the same as that of one of the SCI formats 2-A, 2-B and 2-C, and at least one specific bit field of the second PSCCH is set as a specific value, to indicate that the feedback information of the first SL-PRS is transmitted within the second slot, for example, a specific bit field of the second PSCCH is specified to be set to 1, that is, the number of bits of the second stage SCI is the same as that of one of the SCI formats 2-A, 2-B and 2-C, a first bit in a first bit field of the second PSCCH is set as a first value, and the first value is used to indicate that the first slot is a slot used for transmitting the feedback information of the first sidelink positioning reference signal.

Indication manner B: a number of bits of the second-stage SCI is the same as that of one of SCI formats 2-A, 2-B and 2-C, and one or more information fields are set as a specific value, to indicate that the feedback information of the first SL-PRS is transmitted within the current second slot. For example, "HARQ process number", "New data indicator" and "Redundancy version" in the second-stage SCI are all set to 1 or all set to 0, to indicate that the feedback information of the first SL-PRS is transmitted within the current first slot, that is, the number of bits of the second-stage SCI is the same as that of one of the SCI formats 2-A, 2-B and 2-C, a second bit in a second bit field of the second-stage SCI is set as a second value, and the second value is used to indicate that the second slot is a slot used for transmitting the feedback information of the first sidelink positioning reference signal.

Indication manner C: a number of bits of the second-stage SCI may be different from that of any one of SCI formats 2-A, 2-B and 2-C, and "2nd-stage SCI format" field of the second PSCCH is set to 11, which is used to indicate that a signal currently transmitted within the second slot is the feedback information of the first SL-PRS, that is, the number of bits of the second-stage SCI is different from that of any one of the SCI formats 2-A, 2-B and 2-C, third bits in a third bit field of the second PSCCH are set as a third value, and the third value is used to indicate that the second slot is a slot used for transmitting the feedback information of the first sidelink positioning reference signal.

It is worth noting that the above indication manners in which the second PSCCH or the second-stage SCI indicates that the second slot is the slot used for transmitting the feedback information of the first SL-PRS are merely schematic examples, which are not limited by the embodiments of the present application.

In some embodiments, the reference terminal should transmit the feedback information of the first SL-PRS within time-frequency resources of the second slot indicated by the second PSCCH, and the resources used for transmitting the feedback information of the first SL-PRS do not overlap with the resources used for transmitting the second PSCCH and the second-stage SCI.

In summary, in the method provided by the present embodiments, by using a flexible positioning method of a relative position in the sidelink communication, sidelink-based relative positioning can be realized in different ways, and the accuracy of the sidelink-based relative positioning can be improved.

Embodiment two: for a case where feedback information of a first SL-PRS includes a relative direction.

Step 2010: a first sidelink positioning reference signal transmitted by a target terminal is received.

Schematically, the first SL-PRS transmitted by the target terminal is received at a first reception time.

Optionally, there is no reserved resource set by the target terminal in the first PSCCH received by the reference terminal, or there are one or more resources reserved by the target terminal in the first PSCCH received by the reference terminal.

Step 2020: feedback information of the first sidelink positioning reference signal is transmitted to the target terminal.

The feedback information of the first sidelink positioning reference signal is used to determine a relative positioning result of the target terminal relative to the reference terminal.

Schematically, before the reference terminal transmits the feedback information of the first SL-PRS to the target terminal, it is necessary to determine the relative direction, that is, the relative direction is determined according to an acceptance angle of the first sidelink positioning reference signal.

Schematically, the reference terminal is equipped with an array antenna, the target terminal is equipped with a single antenna, and the reference terminal obtains an angle of arrival by the first manner of calculating the AOA, thereby determining the relative direction of the target terminal relative to the reference terminal.

Schematically, before the reference terminal transmits the feedback information of the first SL-PRS, it is necessary to select a transmission resource for transmitting the feedback information of the first SL-PRS, where acquiring manners of the transmission resource of the feedback information of the first SL-PRS includes the transmission resource acquiring manner one, the transmission resource acquiring manner two, or the transmission resource acquiring manner three, which will not described repeatedly here. That is, a transmission resource of the feedback information of the first sidelink positioning reference signal scheduled by the network device is received, and the transmission resource of the feedback information of the first sidelink positioning reference signal is selected by the network device from a third resource pool, and the third resource pool is a resource pool of a feedback resource that supports a first transmission mode of a sidelink, or the transmission resource of the feedback resource of the first sidelink positioning reference signal is selected from a fourth resource pool; where the fourth resource pool is a resource pool that supports a second transmission mode of a sidelink.

In some embodiments, if the fourth resource pool used for transmitting the feedback information of the first SL-PRS and a resource pool of the second mode resource selection overlap, the target terminal may select the transmission resource used for transmitting the feedback information of the first SL-PRS according to the second mode resource listening.

Optionally, the target terminal does not reserve resources in the transmitted first PSCCH, or the target terminal reserves one or more resources in the transmitted first PSCCH in a process of transmitting the first SL-PRS to the reference terminal, for subsequently transmitting the feedback information of the first SL-PRS on the resources by the reference terminal, that is, in a case where the first PSCCH indicates at least one reserved resource, the transmission resource of the feedback information of the first sidelink positioning reference signal belongs to the reserved resource.

In some embodiments, the feedback information of the first sidelink positioning reference signal occupies a second slot; the feedback information of the first sidelink positioning reference signal and a second PSCCH are transmitted within the second slot simultaneously, or a second PSCCH is transmitted earlier than the feedback information of the first sidelink positioning reference signal; where the second PSCCH is used to indicate a transmission resource and a retransmission resource of the feedback information of the first sidelink positioning reference signal.

In some embodiments, in a case where the reference terminal transmits the feedback information of the first SL-PRS according to the indication manner one, that is, in a case where the feedback information of the first SL-PRS is indicated by the second PSCCH, the reference terminal may reserve a resource for feedback information of the first SL-PRS retransmission, that is, the reference terminal supports sidelink hybrid automatic repeat request (HARQ) feedback; or the reference terminal may not reserve the resource for the feedback information of the first SL-PRS retransmission.

In a case where the reference terminal does not reserve a retransmission resource for the feedback information of the first SL-PRS, second control information transmitted by the reference terminal to the target terminal only includes the feedback information of the first SL-PRS, and the reference terminal may occupy OFDM symbols in the entire second slot to transmit the feedback information of the first SL-PRS, or only occupy a part of the OFDM symbols.

In some embodiments, in a case where the reference terminal transmits the feedback information of the first SL-PRS according to the indication manner two, that is, in a case where the feedback information of the first SL-PRS is indicated by the second PSCCH and/or the second-stage SCI, the reference terminal may reserve a resource for the feedback information of the first SL-PRS retransmission, or may not reserve the resource for the feedback information of the first SL-PRS retransmission.

In a case where the reference terminal reserves a retransmission resource of the feedback information of the first SL-PRS, the reference terminal transmits the second PSCCH for indicating the transmission resource of the feedback information of the first SL-PRS and the retransmission resource of the feedback information of the first SL-PRS, or transmits the second PSSCH for indicating at least one of the transmission resource of the feedback information of the current first SL-PRS or the retransmission resource of the feedback information of the first SL-PRS, that is, second control information transmitted by the reference terminal includes the feedback information of the first SL-PRS, the second PSCCH and/or the second PSSCH, where the second-stage SCI is carried on the second PSSCH.

The reference terminal transmits the second PSCCH and/or the second PSSCH and the feedback information of the first SL-PRS within the second slot, to realize simultaneous transmission of the second PSCCH and/or the second PSCCH and the feedback information of the first SL-PRS. Alternatively, the reference terminal transmits the second PSCCH and/or the second PSSCH before the second slot occupied by transmitting the feedback information of the first SL-PRS, that is, the slot occupied by the second PSCCH and/or the second PSSCH is earlier than that occupied by the feedback information of the first SL-PRS, that is, the second PSCCH is transmitted earlier than the feedback information of the first SL-PRS. The manner of the second PSSCH is consistent with that of the second PSCCH, which will not be repeated described here.

Optionally, the feedback information of the feedback information of the first SL-PRS includes at least one of: the feedback information of the first SL-PRS includes a relative direction of the target terminal relative to the reference terminal, alternatively, the feedback information of the feedback information of the first SL-PRS includes a signal transmit power of the reference terminal, alternatively, the feedback information of the feedback information of the first SL-PRS includes at least one of transceiving time differences.

Schematically, the relative direction in the feedback information is obtained by the reference terminal through manners of calculating the AOA, where the reference terminal is equipped with an array antenna, and the target terminal is equipped with a single antenna.

In some embodiments, the feedback information and the second-stage SCI are transmitted simultaneously, and the second-stage SCI indicates a sequence ID of the first sidelink positioning reference signal.

Schematically, when the reference terminal transmits the sidelink message to the target terminal, it is indicated that a "Destination ID" of the second-stage SCI transmitted by the second PSSCH carrying the information should be related to the sequence ID of the first SL-PRS of the target terminal, for example, a value of the "Destination ID" field of the second-stage SCI is set as the sequence ID of the first SL-PRS transmitted by the target terminal, that is, the feedback information of the first sidelink positioning reference signal and the second-stage SCI are transmitted simultaneously, and the second-stage SCI indicates the sequence ID of the first sidelink positioning reference signal.

In summary, in the method provided by the present embodiments, by using a flexible positioning method of a relative position in the sidelink communication, sidelink-based relative positioning can be realized in different ways, and the accuracy of the sidelink-based relative positioning can be improved.

Embodiment three: for a case where, in feedback information of feedback information of a first SL-PRS, a reference terminal uses a signal received power to calculate a relative direction/relative distance.

Step 2010: a first sidelink positioning reference signal transmitted by a target terminal is received.

Schematically, the first SL-PRS transmitted by the target terminal is received at a first reception time.

Optionally, there is no reserved resource set by the target terminal in the first PSCCH received by the reference terminal, or there are one or more resources reserved by the target terminal in the first PSCCH received by the reference terminal.

Step 2020: feedback information of the first sidelink positioning reference signal is transmitted to the target terminal.

The feedback information of the first sidelink positioning reference signal is used to determine a relative positioning result of the target terminal relative to the reference terminal.

Schematically, before the reference terminal transmits the feedback information of the first SL-PRS to the target terminal, it is necessary to determine the relative distance, that is, the relative distance is determined according to a signal received power of the first sidelink positioning reference signal.

Schematically, the first SL-PRS includes a corresponding signal transmit power, and after receiving the first SL-PRS and the corresponding transmit power, the reference terminal determines the relative distance between the target terminal and the reference terminal based on an estimated signal received power.

In some embodiments, the feedback information of the first sidelink positioning reference signal is carried in a sidelink message.

Schematically, the feedback information of the first SL-PRS includes the relative distance between the target terminal and the reference terminal, where the relative distance is calculated by the reference terminal based on a signal power of the feedback information of the first SL-PRS.

Schematically, before the reference terminal transmits the feedback information of the first SL-PRS, it is necessary to select a transmission resource for transmitting the feedback information of the first SL-PRS, where acquiring manners of the transmission resource of the feedback information of the first SL-PRS includes the transmission resource acquiring manner one, the transmission resource acquiring manner two, or the transmission resource acquiring manner three, which will not described repeatedly here. That is, a transmission resource of the feedback information of the first sidelink positioning reference signal scheduled by the network device is received, and the transmission resource of the feedback information of the first sidelink positioning reference signal is selected by the network device from a third resource pool, and the third resource pool is a resource pool of a feedback resource that supports a first transmission mode of a sidelink, or the transmission resource of the feedback resource of the first sidelink positioning reference signal is selected from a fourth resource pool; where the fourth resource pool is a resource pool that supports a second transmission mode of a sidelink.

In some embodiments, if the fourth resource pool used for transmitting the feedback information of the first SL-PRS and a resource pool of the second mode resource selection overlap, the reference terminal may select the transmission resource used for transmitting the feedback information of the first SL-PRS according to the second mode resource listening.

In some embodiments, the feedback information of the first sidelink positioning reference signal occupies a second slot; the feedback information of the first sidelink positioning reference signal and a second PSCCH are transmitted within the second slot simultaneously, or a second PSCCH is transmitted earlier than the feedback information of the first sidelink positioning reference signal; where the second PSCCH is used to indicate a transmission resource and a retransmission resource of the feedback information of the first sidelink positioning reference signal.

In some embodiments, the feedback information of the first sidelink positioning reference signal is a demodulation reference signal of a second PSCCH and/or a second PSSCH, the feedback information of the first sidelink positioning reference signal and the second PSSCH are transmitted simultaneously, and a media access control control element (MAC CE) of the second PSSCH indicates a signal transmit power of the demodulation reference signal; and the feedback information of the first sidelink positioning reference signal and a second-stage SCI are transmitted simultaneously, and the second-stage SCI indicates the signal transmit power of the demodulation reference signal.

Schematically, the feedback information of the first SL-PRS is the demodulation reference signal of the second PSCCH and/or the second PSSCH transmitted by the reference terminal, and the reference terminal should indicate a transmit power of the demodulation reference signal of the second PSCCH and/or the second PSSCH. For example, the reference terminal may indicate the transmit power of the demodulation reference signal of the second PSCCH and/or the second PSSCH through the medium access control control element (MAC CE) carried on the second PSSCH, or indicate the transmit power of the demodulation reference signal of the second PSCCH and/or the second PSSCH through the second-stage SCI.

Optionally, the reference terminal transmits the feedback information of the first SL-PRS on a resource reserved by the target terminal, that is, in a case where the second PSCCH indicates at least one reserved resource, a transmission resource of the feedback information of the first sidelink positioning reference signal belongs to the reserved resource. Alternatively, a resource on which the reference terminal transmits feedback information of the feedback information of the first SL-PRS is independently selected by the reference terminal.

In summary, in the method provided by the present embodiments, by using a flexible positioning method of a relative position in the sidelink communication, sidelink-based relative positioning can be realized in different ways, and the accuracy of the sidelink-based relative positioning can be improved.

FIG. 21 illustrates a flowchart of a positioning method of a relative position provided by an exemplary embodiment of the present application. The present embodiment is illustrated by taking an example of the method being applied to a target terminal and a reference terminal, and the method includes at least part of the following steps.

Step 2110: the target terminal transmits a first sidelink positioning reference signal to the reference terminal.

Optionally, the first sidelink positioning reference signal (SL-PRS), the target terminal may indicate the first sidelink positioning reference signal (SL-PRS) for transmission through a first physical sidelink control channel (PSCCH), or the target terminal may select a resource for transmitting the first SL-PRS according to resource listening.

Step 2120: the reference terminal transmits feedback information of the first sidelink positioning reference signal to the target terminal.

Optionally, the feedback information of the first SL-PRS transmitted by the reference terminal includes a second sidelink positioning reference signal (SL-PRS) and a transceiving time difference. Alternatively, the feedback information of the first SL-PRS includes a relative direction of the target terminal relative to the reference terminal. Alternatively, the feedback information of the first SL-PRS includes a relative distance of the target terminal relative to the reference terminal.

In step 2130, the target terminal determines a relative positioning result based on the feedback information of the first sidelink positioning reference signal.

Schematically, the target terminal determines at least one of the relative direction or the relative distance of the target terminal relative to the reference terminal according to the feedback information of the first SL-PRS.

In summary, in the method provided by the present embodiments, by using a flexible positioning method of a relative position in the sidelink communication, sidelink-based relative positioning can be realized in different ways, and the accuracy of the sidelink-based relative positioning can be improved.

In the positioning methods of the relative position provided by the present application, the target terminal transmits the first SL-PRS as well as transmits the first PSCCH and/or the second-stage SCI within the same slot, to indicate the transmission mode and resource reservation of the first SL-PRS, and then determines the relative position according to the second SL-PRS and the transceiving time difference transmitted by the reference terminal. Alternatively, the target terminal transmits the first SL-PRS, the reference terminal calculates the angle of arrival after receiving the first SL-PRS, and indicates the angle of arrival to the target terminal through the sidelink message. Alternatively, the target terminal transmits the first SL-PRS and indicates the transmit power of the first SL-PRS, and the reference terminal determines the relative distance between the target terminal and the reference terminal according to the estimated signal received power. Through the methods proposed in the present application, sidelink-based relative positioning may be effectively supported.

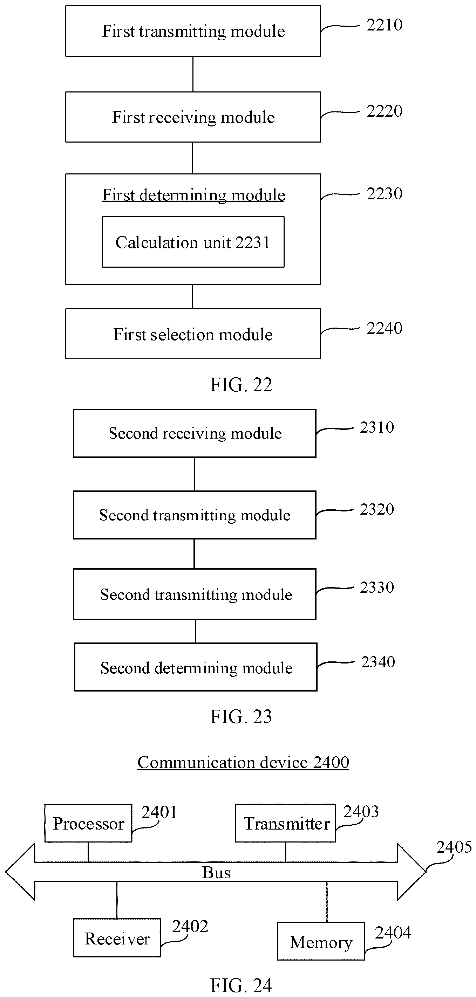

FIG. 22 illustrates a structural block diagram of a positioning apparatus of a relative position provided by an exemplary embodiment of the present application, where the apparatus includes at least part of the following modules:

a first transmitting module 2210, configured to transmit a first sidelink positioning reference signal to a reference terminal;

a first receiving module 2220, configured to receive feedback information of the first sidelink positioning reference signal transmitted by the reference terminal; and

a first determining module 2230, configured to determine a relative positioning result of a target terminal relative to the reference terminal based on the feedback information of the first sidelink positioning reference signal.

In an optional design, the feedback information of the first sidelink positioning reference signal includes:

a second sidelink positioning reference signal and a transceiving time difference, the transceiving time difference being used for indicating a time difference between a reception end time of the first sidelink positioning reference signal and a transmission start time of the second sidelink positioning reference signal.

In an optional design, the first determining module 2230 includes:

a calculation unit 2231, configured to calculate at least one of a relative direction or a relative distance of the target terminal relative to the reference terminal based on the second sidelink positioning reference signal and the transceiving time difference.

In an optional design, the calculation unit 2231 is further configured to: calculate the relative distance of the target terminal relative to the reference terminal based on the second sidelink positioning reference signal and the transceiving time difference, and/or calculate the relative direction of the target terminal relative to the reference terminal based on an angle of arrival of the second sidelink positioning reference signal.

In an optional design, the first sidelink positioning reference signal occupies a first slot, the first sidelink positioning reference signal and a first physical sidelink control channel (PSCCH) are transmitted within the first slot simultaneously, and the first PSCCH is used to indicate that the first slot is a slot used for transmitting the first sidelink positioning reference signal.

In an optional design, a modulation and coding scheme field of the first PSCCH is set as a target value, and the target value is used to indicate that the first slot is a slot used for transmitting the first sidelink positioning reference signal.

In an optional design, the first sidelink positioning reference signal occupies a first slot, the first sidelink positioning reference signal, a first PSCCH and a second-stage sidelink control information (SCI) are transmitted within the first slot simultaneously, and the first PSCCH or the second-stage SCI is used to indicate that the first slot is a slot used for transmitting the first sidelink positioning reference signal.

In an optional design, the second-stage SCI is used to indicate at least one of the following information:

an ID of the target terminal;
an ID of the reference terminal;
a sequence ID of the first sidelink positioning reference signal; or
a comb pattern of the first sidelink positioning reference signal.

In an optional design, a number of bits of the second-stage SCI is the same as that of one of SCI formats 2-A, 2-B and 2-C, a first bit in a first bit field of the first PSCCH is set as a first value, and the first value is used to indicate that the first slot is a slot used for transmitting the first sidelink positioning reference signal; or a number of bits of the second-stage SCI is the same as that of one of SCI formats 2-A, 2-B and 2-C, a second bit in a second bit field of the second-stage SCI is set as a second value, and the second value is used to indicate that the first slot is a slot used for transmitting the first sidelink positioning reference signal; or, a number of bits of the second-stage SCI is different from that of any one of SCI formats 2-A, 2-B and 2-C, third bits in a third bit field of the first PSCCH are set as a third value, and the third value is used to indicate that the first slot is a slot used for transmitting the first sidelink positioning reference signal.

In an optional design, in a case where the first PSCCH indicates at least one reserved resource, a transmission resource of the second sidelink positioning reference signal belongs to the reserved resource.

In an optional design, the feedback information of the first sidelink positioning reference signal includes: at least one of a relative direction or a relative distance of the target terminal relative to the reference terminal.

In an optional design, the relative direction is determined by the reference terminal based on an acceptance angle of the first sidelink positioning reference signal.

In an optional design, the relative distance is determined by the reference terminal based on a signal received power of the first sidelink positioning reference signal.

In an optional design, the feedback information of the first sidelink positioning reference signal is carried in a sidelink message.

In an optional design, the apparatus further includes:

the first receiving module 2220, further configured to receive a transmission resource of the first sidelink positioning reference signal scheduled by a network device, where the transmission resource of the first sidelink positioning reference signal is selected by the network device from a first resource pool, and the first resource pool is a resource pool that supports a first transmission mode of a sidelink; or
a first selection module 2240, configured to select a transmission resource of the first sidelink positioning reference signal from a second resource pool, where the second resource pool is a resource pool that supports a second transmission mode of a sidelink.

In an optional design, the first sidelink positioning reference signal occupies a first slot; and the first sidelink positioning reference signal and a first PSCCH are transmitted within a first slot simultaneously, or a first PSCCH is transmitted earlier than the first sidelink positioning reference signal; where the first PSCCH is used to indicate a transmission resource and a retransmission resource of the first sidelink positioning reference signal.

In an optional design, the feedback information and a second-stage SCI are transmitted simultaneously, and the second-stage SCI indicates a sequence ID of the first sidelink positioning reference signal.

In an optional design, the first sidelink positioning reference signal is a demodulation reference signal of a first PSCCH and/or a first PSSCH;
the first sidelink positioning reference signal and the first PSSCH are transmitted simultaneously, and a medium access control control element (MAC CE) of the first PSSCH indicates a signal transmit power of the demodulation reference signal; and the first sidelink positioning reference signal and a second-stage SCI are transmitted simultaneously, and the second-stage SCI indicates the signal transmit power of the demodulation reference signal.

In summary, in the apparatus provided by the present embodiments, by using a flexible positioning method of a relative position in the sidelink communication, sidelink-based relative positioning can be realized in different ways, and the accuracy of the sidelink-based relative positioning can be improved.

FIG. 23 illustrates a structural block diagram of a positioning apparatus of a relative position provided by an exemplary embodiment of the present application, where the apparatus includes at least part of the following modules:

a second receiving module 2310, configured to receive a first sidelink positioning reference signal transmitted by a target terminal; and
a second transmitting module 2320, configured to transmit feedback information of the first sidelink positioning reference signal to the target terminal, the feedback information of the first sidelink positioning reference signal being used to determine a relative positioning result of the target terminal relative to a reference terminal.

In an optional design, the feedback information of the first sidelink positioning reference signal includes: a second sidelink positioning reference signal and a transceiving time difference, the transceiving time difference being used for indicating a time difference between a reception end time of the first sidelink positioning reference signal and a transmission start time of the second sidelink positioning reference signal.

In an optional design, the apparatus further includes:

In an optional design, the feedback information of the first sidelink positioning reference signal occupies a second slot, the feedback information of the first sidelink positioning reference signal and a second physical sidelink control channel (PSCCH) are transmitted within the second slot simultaneously, and the second PSCCH is used to indicate that the second slot is a slot used for transmitting the feedback information of the first sidelink positioning reference signal.

In an optional design, a modulation and coding scheme field of the second PSCCH is set as a target value, and the target value is used to indicate that the second slot is a slot used for transmitting the feedback information of the first sidelink positioning reference signal.

In an optional design, the feedback information of the first sidelink positioning reference signal occupies a second slot, the feedback information of the first sidelink positioning reference signal, a second PSCCH and a second-stage SCI are transmitted within the second slot simultaneously, and the second PSCCH or the second-stage SCI is used to indicate that the second slot is a slot used for transmitting the feedback information of the first sidelink positioning reference signal.

In an optional design, the second-stage SCI is used to indicate at least one of the following information:

an ID of the target terminal;
an ID of the reference terminal;
a sequence ID of a second sidelink positioning reference signal; or
a comb pattern of a second sidelink positioning reference signal.

In an optional design, a number of bits of the second-stage SCI is the same as that of one of SCI formats 2-A, 2-B and 2-C, a first bit in a first bit field of the second PSCCH is set as a first value, and the first value is used to indicate that the second slot is a slot used for transmitting the feedback information of the first sidelink positioning reference signal; or

a number of bits of the second-stage SCI is the same as that of one of SCI formats 2-A, 2-B and 2-C, a second bit in a second bit field of the second-stage SCI is set as a second value, and the second value is used to indicate that the second slot is a slot used for transmitting the feedback information of the first sidelink positioning reference signal; or a number of bits of the second-stage SCI is different from that of any one of SCI formats 2-A, 2-B and 2-C, third bits in a third bit field of the second PSCCH are set as a third value, and the third value is used to indicate that a first slot is a slot used for transmitting the feedback information of the first sidelink positioning reference signal.

In an optional design, in a case where a first PSCCH indicates at least one reserved resource, a transmission resource of a second sidelink positioning reference signal belongs to the reserved resource.

In an optional design, the feedback information of the first sidelink positioning reference signal includes:
at least one of a relative direction or a relative distance of the target terminal relative to the reference terminal.

In an optional design, the apparatus further includes:
a second determining module 2340, configured to determine the relative direction based on an acceptance angle of the first sidelink positioning reference signal.

In an optional design, the apparatus further includes:
the second determining module 2340, further configured to determine the relative distance based on a signal received power of the first sidelink positioning reference signal.

In an optional design, the feedback information of the first sidelink positioning reference signal is carried in a sidelink message.

In an optional design, the apparatus further includes:

the second transmitting module 2320, configured to select, from a third resource pool, a transmission resource used for transmitting the feedback information of the first sidelink positioning reference signal; where the third resource pool is a resource pool based on a second transmission mode of a sidelink; and
the second receiving module 2310, configured to receive scheduling information of a network device; and determining, from a fourth resource pool, a transmission resource used for transmitting the feedback information of the first sidelink positioning reference signal by using the scheduling information; where the fourth resource pool is a resource pool based on a first transmission mode of a sidelink.

In an optional design, the feedback information of the first sidelink positioning reference signal occupies a second slot; and the feedback information of the first sidelink positioning reference signal and a second PSCCH are transmitted within a second slot simultaneously, or a second PSCCH is transmitted earlier than the feedback information of the first sidelink positioning reference signal; where the second PSCCH is used to indicate a transmission resource and a retransmission resource of the feedback information of the first sidelink positioning reference signal.

In an optional design, the feedback information of the first sidelink positioning reference signal and a second-stage SCI are transmitted simultaneously, and the second-stage SCI indicates a sequence ID of the first sidelink positioning reference signal.

In an optional design, the feedback information of the first sidelink positioning reference signal is a demodulation reference signal of a second PSCCH and/or a second PSSCH; the feedback information of the first sidelink positioning reference signal and the second PSSCH are transmitted simultaneously, and a medium access control control element (MAC CE) of a first PSSCH indicates a signal transmit power of the demodulation reference signal; and the feedback information of the first sidelink positioning reference signal and a second-stage SCI are transmitted simultaneously, and the second-stage SCI indicates the signal transmit power of the demodulation reference signal.

In summary, in the apparatus provided by the present embodiments, by using a flexible positioning method of a relative position in the sidelink communication, sidelink-based relative positioning can be realized in different ways, and the accuracy of the sidelink-based relative positioning can be improved.

FIG. 24 illustrates a schematic structural diagram of a communication device (a terminal device or a network device) provided by an exemplary embodiment of the present application. The communication device 2400 includes: a processor 2401, a receiver 2402, a transmitter 2403, a memory 2404, and a bus 2405.

The processor 2401 includes one or more processing cores, and the processor 2401 executes various functional applications and information processing by running software programs and modules.

The receiver 2402 and the transmitter 2403 may be implemented as a communication component, and the communication component may be a communication chip.

The memory 2404 is connected to the processor 2401 via the bus 2405. The memory 2404 may be configured to store at least one instruction, and the processor 2401 is configured to execute the at least one instruction, to implement various steps in the above method embodiments.

Further, the memory 2404 may be implemented by any type of volatile (transitory) or non-volatile (non-transitory) storage device, or a combination thereof. The volatile or non-volatile storage device includes, but not limited to, a magnetic or optical disk, an electrically erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In an exemplary embodiment, a computer-readable storage medium is further provided. The computer-readable storage medium has at least one segment of a program stored therein, and the at least one segment of the program is loaded and executed by the processor to implement the positioning methods of the relative position provided by the above various method embodiments.

In an exemplary embodiment, a chip is further provided. The chip includes: a programmable logic circuit and/or program instructions, when the chip is running on the communication device, the positioning methods of the relative position provided by the above various method embodiments are implemented.

In an exemplary embodiment, a computer program product is further provided. When the computer program product is running on a processor of a computer device, the computer device is caused to perform the positioning methods of the relative position above.

In an exemplary embodiment, a communication system is further provided. The communication system includes the first terminal, the second terminal and the network device, to implement the positioning methods of the relative position provided by the above various method embodiments.

It should be appreciated by those skilled in the art that, in one or more of the above examples, functions described in the embodiments of the present application may be implemented in hardware, software, firmware, or any combination thereof. When implemented in software, these functions may be stored in a computer-readable medium or transmitted as one or more instructions or codes on a computer-readable medium. The computer-readable medium includes a computer storage medium and a communication medium, where communication medium includes any medium that facilitates transfer of a computer program from one place to another. The storage medium may be any available medium that can be accessed by a general-purpose or special-purpose computer.

The foregoing descriptions are merely optional embodiments of the present application, and are not intended to limit the present application. Any modification, equivalent replacement, improvement, or the like made within the spirit and principles of the present application shall be included within the protection scope of the present application.

**Claims**

1. A positioning method of a relative position, performed by a target terminal and comprising:

   transmitting a first sidelink positioning reference signal to a reference terminal;
   receiving feedback information of the first sidelink positioning reference signal transmitted by the reference terminal; and
   determining a relative positioning result of the target terminal relative to the reference terminal based on the feedback information of the first sidelink positioning reference signal.

2. The method according to claim 1, wherein the feedback information of the first sidelink positioning reference signal comprises:

a second sidelink positioning reference signal and a transceiving time difference, the transceiving time difference being used for indicating a time difference between a reception end time of the first sidelink positioning reference signal and a transmission start time of the second sidelink positioning reference signal.

3. The method according to claim 2, wherein determining the relative positioning result of the target terminal relative to the reference terminal based on the feedback information of the first sidelink positioning reference signal comprises: calculating at least one of a relative direction or a relative distance of the target terminal relative to the reference terminal based on the second sidelink positioning reference signal and the transceiving time difference.

4. The method according to claim 3, wherein calculating at least one of the relative direction or the relative distance of the target terminal relative to the reference terminal based on the second sidelink positioning reference signal and the transceiving time difference comprises:

   calculating the relative distance of the target terminal relative to the reference terminal based on the second sidelink positioning reference signal and the transceiving time difference;
   and/or
   calculating the relative direction of the target terminal relative to the reference terminal based on an angle of arrival of the second sidelink positioning reference signal.

5. The method according to any one of claims 2 to 4, wherein
   the first sidelink positioning reference signal occupies a first slot, the first sidelink positioning reference signal and a first physical sidelink control channel (PSCCH) are transmitted within the first slot simultaneously, and the first PSCCH is used to indicate that the first slot is a slot used for transmitting the first sidelink positioning reference signal.

6. The method according to claim 5, wherein
   a modulation and coding scheme field of the first PSCCH is set as a target value, and the target value is used to indicate that the first slot is a slot used for transmitting the first sidelink positioning reference signal.

7. The method according to any one of claims 2 to 4, wherein
   the first sidelink positioning reference signal occupies a first slot, the first sidelink positioning reference signal, a first PSCCH and a second-stage sidelink control information (SCI) are transmitted within the first slot simultaneously, and the first PSCCH or the second-stage SCI is used to indicate that the first slot is a slot used for transmitting the first sidelink positioning reference signal.

8. The method according to claim 7, wherein the second-stage SCI is used to indicate at least one of following information:

   an ID of the target terminal;
   an ID of the reference terminal;
   a sequence ID of the first sidelink positioning reference signal; or
   a comb pattern of the first sidelink positioning reference signal.

9. The method according to claim 7, wherein

   a number of bits of the second-stage SCI is the same as that of one of SCI formats 2-A, 2-B and 2-C, a first bit in a first bit field of the first PSCCH is set as a first value, and the first value is used to indicate that the first slot is a slot used for transmitting the first sidelink positioning reference signal; or
   a number of bits of the second-stage SCI is the same as that of one of SCI formats 2-A, 2-B and 2-C, a second bit in a second bit field of the second-stage SCI is set as a second value, and the second value is used to indicate that the first slot is a slot used for transmitting the first sidelink positioning reference signal; or
   a number of bits of the second-stage SCI is different from that of any one of SCI formats 2-A, 2-B and 2-C, third bits in a third bit field of the first PSCCH are set to a third value, and the third value is used to indicate that the first slot is a slot used for transmitting the first sidelink positioning reference signal.

10. The method according to claim 7, wherein
    in a case where the first PSCCH indicates at least one reserved resource, a transmission resource of the second sidelink positioning reference signal belongs to the reserved resource.

11. The method according to claim 1, wherein the feedback information of the first sidelink positioning reference signal comprises:
at least one of a relative direction or a relative distance of the target terminal relative to the reference terminal.

12. The method according to claim 11, wherein the relative direction is determined by the reference terminal based on an acceptance angle of the first sidelink positioning reference signal.

13. The method according to claim 11, wherein the relative distance is determined by the reference terminal based on a signal received power of the first sidelink positioning reference signal.

14. The method according to claim 11, wherein the feedback information of the first sidelink positioning reference signal is carried in a sidelink message.

15. The method according to any one of claims 2 to 4, or 11 to 14, further comprising:

receiving a transmission resource of the first sidelink positioning reference signal scheduled by a network device, wherein the transmission resource of the first sidelink positioning reference signal is selected by the network device from a first resource pool, and the first resource pool is a resource pool that supports a first transmission mode of a sidelink;
or
selecting a transmission resource of the first sidelink positioning reference signal from a second resource pool, wherein the second resource pool is a resource pool that supports a second transmission mode of a sidelink.

16. The method according to any one of claims 11 to 14, wherein the first sidelink positioning reference signal occupies a first slot; and

the first sidelink positioning reference signal and a first PSCCH are transmitted within a first slot simultaneously, or a first PSCCH is transmitted earlier than the first sidelink positioning reference signal;
wherein the first PSCCH is used to indicate a transmission resource and a retransmission resource of the first sidelink positioning reference signal.

17. The method according to any one of claims 11 to 14, wherein the feedback information and a second-stage SCI are transmitted simultaneously, and the second-stage SCI indicates a sequence ID of the first sidelink positioning reference signal.

18. The method according to claim 13, wherein the first sidelink positioning reference signal is a demodulation reference signal of a first PSCCH and/or a first PSSCH;

the first sidelink positioning reference signal and the first PSSCH are transmitted simultaneously, and a medium access control control element (MAC CE) of the first PSSCH indicates a signal transmit power of the demodulation reference signal; and
the first sidelink positioning reference signal and a second-stage SCI are transmitted simultaneously, and the second-stage SCI indicates the signal transmit power of the demodulation reference signal.

19. A positioning method of a relative position, performed by a reference terminal and comprising:

receiving a first sidelink positioning reference signal transmitted by a target terminal; and
transmitting feedback information of the first sidelink positioning reference signal to the target terminal, the feedback information of the first sidelink positioning reference signal being used to determine a relative positioning result of the target terminal relative to the reference terminal.

20. The method according to claim 19, wherein the feedback information of the first sidelink positioning reference signal comprises:
a second sidelink positioning reference signal and a transceiving time difference, the transceiving time difference being used for indicating a time difference between a reception end time of the first sidelink positioning reference signal and a transmission start time of the second sidelink positioning reference signal.

21. The method according to claim 19 or 20, wherein

the feedback information of the first sidelink positioning reference signal occupies a second slot, the feedback information of the first sidelink positioning reference signal and a second physical sidelink control channel (PSCCH) are transmitted within the second slot simultaneously, and the second PSCCH is used to indicate that the second slot is a slot used for transmitting the feedback information of the first sidelink positioning reference signal.

22. The method according to claim 21, wherein
a modulation and coding scheme field of the second PSCCH is set as a target value, and the target value is used to indicate that the second slot is a slot used for transmitting the feedback information of the first sidelink positioning reference signal.

23. The method according to claim 19 or 20, wherein
the feedback information of the first sidelink positioning reference signal occupies a second slot, the feedback information of the first sidelink positioning reference signal, a second PSCCH and a second-stage SCI are transmitted within the second slot simultaneously, and the second PSCCH or the second-stage SCI is used to indicate that the second slot is a slot used for transmitting the feedback information of the first sidelink positioning reference signal.

24. The method according to claim 23, wherein the second-stage SCI is used to indicate at least one of following information:

an ID of the target terminal;
an ID of the reference terminal;
a sequence ID of a second sidelink positioning reference signal; or
a comb pattern of a second sidelink positioning reference signal.

25. The method according to claim 26, wherein

a number of bits of the second-stage SCI is the same as that of one of SCI formats 2-A, 2-B and 2-C, a first bit in a first bit field of the second PSCCH is set as a first value, and the first value is used to indicate that the second slot is a slot used for transmitting the feedback information of the first sidelink positioning reference signal; or
a number of bits of the second-stage SCI is the same as that of one of SCI formats 2-A, 2-B and 2-C, a second bit in a second bit field of the second-stage SCI is set as a second value, and the second value is used to indicate that the second slot is a slot used for transmitting the feedback information of the first sidelink positioning reference signal; or
a number of bits of the second-stage SCI is different from that of any one of SCI formats 2-A, 2-B and 2-C, third bits in a third bit field of the second PSCCH are set as a third value, and the third value is used to indicate that a first slot is a slot used for transmitting the feedback information of the first sidelink positioning reference signal.

26. The method according to claim 21, wherein
in a case where a first PSCCH indicates at least one reserved resource, a transmission resource of the feedback information of the first sidelink positioning reference signal belongs to the reserved resource.

27. The method according to claim 19, wherein the feedback information of the first sidelink positioning reference signal comprises:
at least one of a relative direction or a relative distance of the target terminal relative to the reference terminal.

28. The method according to claim 27, wherein before transmitting the feedback information of the first sidelink positioning reference signal to the target terminal, the method further comprises:
determining the relative direction based on an acceptance angle of the first sidelink positioning reference signal.

29. The method according to claim 27, wherein before transmitting the feedback information of the first sidelink positioning reference signal to the target terminal, the method further comprises:
determining the relative distance based on a signal received power of the first sidelink positioning reference signal.

30. The method according to claim 27, wherein the feedback information of the first sidelink positioning reference signal is carried in a sidelink message.

31. The method according to any one of claims 19 or 20, or 27 to 30, further comprising:

selecting, from a third resource pool, a transmission resource used for transmitting the feedback information of the first sidelink positioning reference signal; wherein the third resource pool is a resource pool based on a second transmission mode of a sidelink;

or

receiving scheduling information of a network device; and determining, from a fourth resource pool, a transmission resource used for transmitting the feedback information of the first sidelink positioning reference signal by using the scheduling information; wherein the fourth resource pool is a resource pool based on a first transmission mode of a sidelink.

32. The method according to any one of claims 27 to 30, wherein the feedback information of the first sidelink positioning reference signal occupies a second slot; and

the feedback information of the first sidelink positioning reference signal and a second PSCCH are transmitted within a second slot simultaneously, or a second PSCCH is transmitted earlier than the feedback information of the first sidelink positioning reference signal;

wherein the second PSCCH is used to indicate a transmission resource and a retransmission resource of the feedback information of the first sidelink positioning reference signal.

33. The method according to any one of claims 27 to 30, wherein the feedback information of the first sidelink positioning reference signal and a second-stage SCI are transmitted simultaneously, and the second-stage SCI indicates a sequence ID of the first sidelink positioning reference signal.

34. The method according to claim 29, wherein the feedback information of the first sidelink positioning reference signal is a demodulation reference signal of a second PSCCH and/or a second PSSCH;

the feedback information of the first sidelink positioning reference signal and the second PSSCH are transmitted simultaneously, and a medium access control control element (MAC CE) of first PSSCH indicates a signal transmit power of the demodulation reference signal; and

the feedback information of the first sidelink positioning reference signal and a second-stage SCI are transmitted simultaneously, and the second-stage SCI indicates the signal transmit power of the demodulation reference signal.

35. A positioning apparatus of a relative position, comprising:

a first transmitting module, configured to transmit a first sidelink positioning reference signal to a reference terminal;

a first receiving module, configured to receive feedback information of the first sidelink positioning reference signal transmitted by the reference terminal; and

a first determining module, configured to determine a relative positioning result of a target terminal relative to the reference terminal based on the feedback information of the first sidelink positioning reference signal.

36. The apparatus according to claim 35, wherein the feedback information of the first sidelink positioning reference signal comprises:

a second sidelink positioning reference signal and a transceiving time difference, the transceiving time difference being used for indicating a time difference between a reception end time of the first sidelink positioning reference signal and a transmission start time of the second sidelink positioning reference signal.

37. The apparatus according to claim 36, wherein the first determining module comprises:

a calculation unit, configured to calculate at least one of a relative direction or a relative distance of the target terminal relative to the reference terminal based on the second sidelink positioning reference signal and the transceiving time difference.

38. The apparatus according to claim 37, wherein the calculation unit is further configured to: calculate the relative distance of the target terminal relative to the reference terminal based on the second sidelink positioning reference signal and the transceiving time difference;

and/or

calculate the relative direction of the target terminal relative to the reference terminal based on an angle of arrival of the second sidelink positioning reference signal.

**39.** The apparatus according to any one of claims 36 to 38, wherein
the first sidelink positioning reference signal occupies a first slot, the first sidelink positioning reference signal and a first physical sidelink control channel (PSCCH) are transmitted within the first slot simultaneously, and the first PSCCH is used to indicate that the first slot is a slot used for transmitting the first sidelink positioning reference signal.

**40.** The apparatus according to claim 39, wherein
a modulation and coding scheme field of the first PSCCH is set as a target value, and the target value is used to indicate that the first slot is a slot used for transmitting the first sidelink positioning reference signal.

**41.** The apparatus according to any one of claims 36 to 38, wherein
the first sidelink positioning reference signal occupies a first slot, the first sidelink positioning reference signal, a first PSCCH and a second-stage sidelink control information (SCI) are transmitted within the first slot simultaneously, and the first PSCCH or the second-stage SCI is used to indicate that the first slot is a slot used for transmitting the first sidelink positioning reference signal.

**42.** The apparatus according to claim 41, wherein the second-stage SCI is used to indicate at least one of following information:

an ID of the target terminal;
an ID of the reference terminal;
a sequence ID of the first sidelink positioning reference signal; or
a comb pattern of the first sidelink positioning reference signal.

**43.** The apparatus according to claim 41, wherein

a number of bits of the second-stage SCI is the same as that of one of SCI formats 2-A, 2-B and 2-C, a first bit in a first bit field of the first PSCCH is set as a first value, and the first value is used to indicate that the first slot is a slot used for transmitting the first sidelink positioning reference signal; or
a number of bits of the second-stage SCI is the same as that of one of SCI formats 2-A, 2-B and 2-C, a second bit in a second bit field of the second-stage SCI is set as a second value, and the second value is used to indicate that the first slot is a slot used for transmitting the first sidelink positioning reference signal; or
a number of bits of the second-stage SCI is different from that of any one of SCI formats 2-A, 2-B and 2-C, third bits in a third bit field of the first PSCCH are set as a third value, and the third value is used to indicate that the first slot is a slot used for transmitting the first sidelink positioning reference signal.

**44.** The method according to claim 41, wherein
in a case where the first PSCCH indicates at least one reserved resource, a transmission resource of the second sidelink positioning reference signal belongs to the reserved resource.

**45.** The apparatus according to claim 35, wherein the feedback information of the first sidelink positioning reference signal comprises:
at least one of a relative direction or a relative distance of the target terminal relative to the reference terminal.

**46.** The apparatus according to claim 45, wherein the relative direction is determined by the reference terminal based on an acceptance angle of the first sidelink positioning reference signal.

**47.** The apparatus according to claim 45, wherein the relative distance is determined by the reference terminal based on a signal received power of the first sidelink positioning reference signal.

**48.** The apparatus according to claim 45, wherein the feedback information of the first sidelink positioning reference signal is carried in a sidelink message.

**49.** The apparatus according to any one of claims 36 to 38, or 45 to 49, further comprising:

the first receiving module, further configured to receive a transmission resource of the first sidelink positioning reference signal scheduled by a network device, wherein the transmission resource of the first sidelink positioning reference signal is selected by the network device from a first resource pool, and the first resource pool is a resource pool that supports a first transmission mode of a sidelink;

or

a first selection module, configured to select a transmission resource of the first sidelink positioning reference signal from a second resource pool, wherein the second resource pool is a resource pool that supports a second transmission mode of a sidelink.

50. The apparatus according to any one of claims 45 to 49, wherein the first sidelink positioning reference signal occupies a first slot; and

the first sidelink positioning reference signal and a first PSCCH are transmitted within a first slot simultaneously, or a first PSCCH is transmitted earlier than the first sidelink positioning reference signal;
wherein the first PSCCH is used to indicate a transmission resource and a retransmission resource of the first sidelink positioning reference signal.

51. The apparatus according to any one of claims 45 to 49, wherein the feedback information and a second-stage SCI are transmitted simultaneously, and the second-stage SCI indicates a sequence ID of the first sidelink positioning reference signal.

52. The apparatus according to claim 46, wherein the first sidelink positioning reference signal is a demodulation reference signal of a first PSCCH and/or a first PSSCH;

the first sidelink positioning reference signal and the first PSSCH are transmitted simultaneously, and a medium access control control element (MAC CE) of the first PSSCH indicates a signal transmit power of the demodulation reference signal; and
the first sidelink positioning reference signal and a second-stage SCI are transmitted simultaneously, and the second-stage SCI indicates the signal transmit power of the demodulation reference signal.

53. A positioning apparatus of a relative position, comprising:

a second receiving module, configured to receive a first sidelink positioning reference signal transmitted by a target terminal; and
a second transmitting module, configured to transmit feedback information of the first sidelink positioning reference signal to the target terminal, the feedback information of the first sidelink positioning reference signal being used to determine a relative positioning result of the target terminal relative to a reference terminal.

54. The apparatus according to claim 53, wherein the feedback information of the first sidelink positioning reference signal comprises:
a second sidelink positioning reference signal and a transceiving time difference, the transceiving time difference being used for indicating a time difference between a reception end time of the first sidelink positioning reference signal and a transmission start time of the second sidelink positioning reference signal.

55. The apparatus according to claim 53 or 54, wherein
the feedback information of the first sidelink positioning reference signal occupies a second slot, the feedback information of the first sidelink positioning reference signal and a second physical sidelink control channel (PSCCH) are transmitted within the second slot simultaneously, and the second PSCCH is used to indicate that the second slot is a slot used for transmitting the feedback information of the first sidelink positioning reference signal.

56. The apparatus according to claim 55, wherein
a modulation and coding scheme field of the second PSCCH is set as a target value, and the target value is used to indicate that the second slot is a slot used for transmitting the feedback information of the first sidelink positioning reference signal.

57. The apparatus according to claim 53 or 54, wherein
the feedback information of the first sidelink positioning reference signal occupies a second slot, the feedback information of the first sidelink positioning reference signal, a second PSCCH and a second-stage SCI are transmitted within the second slot simultaneously, and the second PSCCH or the second-stage SCI is used to indicate that the second slot is a slot used for transmitting the feedback information of the first sidelink positioning reference signal.

58. The apparatus according to claim 58, wherein the second-stage SCI is used to indicate at least one of following information:

an ID of the target terminal;
an ID of the reference terminal;
a sequence ID of a second sidelink positioning reference signal; or
a comb pattern of a second sidelink positioning reference signal.

59. The apparatus according to claim 58, wherein

a number of bits of the second-stage SCI is the same as that of one of SCI formats 2-A, 2-B and 2-C, a first bit in a first bit field of the second PSCCH is set as a first value, and the first value is used to indicate that the second slot is a slot used for transmitting the feedback information of the first sidelink positioning reference signal; or
a number of bits of the second-stage SCI is the same as that of one of SCI formats 2-A, 2-B and 2-C, a second bit in a second bit field of the second-stage SCI is set as a second value, and the second value is used to indicate that the second slot is a slot used for transmitting the feedback information of the first sidelink positioning reference signal; or
a number of bits of the second-stage SCI is different from that of any one of SCI formats 2-A, 2-B and 2-C, third bits in a third bit field of the second PSCCH are set as a third value, and the third value is used to indicate that a first slot is a slot used for transmitting the feedback information of the first sidelink positioning reference signal.

60. The method according to claim 55, wherein
in a case where a first PSCCH indicates at least one reserved resource, a transmission resource of a second sidelink positioning reference signal belongs to the reserved resource.

61. The apparatus according to claim 53, wherein the feedback information of the first sidelink positioning reference signal comprises:
at least one of a relative direction or a relative distance of the target terminal relative to the reference terminal.

62. The apparatus according to claim 61, further comprising:
a second determining module, configured to determine the relative direction based on an acceptance angle of the first sidelink positioning reference signal.

63. The apparatus according to claim 61, further comprising:
the second determining module, further configured to determine the relative distance based on a signal received power of the first sidelink positioning reference signal.

64. The apparatus according to claim 61, wherein the feedback information of the first sidelink positioning reference signal is carried in a sidelink message.

65. The apparatus according to any one of claims 61 to 64, further comprising:

the second transmitting module, configured to select, from a third resource pool, a transmission resource used for transmitting the feedback information of the first sidelink positioning reference signal; wherein the third resource pool is a resource pool based on a second transmission mode of a sidelink; and
the second receiving module, configured to receive scheduling information of a network device; and determining, from a fourth resource pool, a transmission resource used for transmitting the feedback information of the first sidelink positioning reference signal by using the scheduling information; wherein the fourth resource pool is a resource pool based on a first transmission mode of a sidelink.

66. The apparatus according to any one of claims 61 to 64, wherein the feedback information of the first sidelink positioning reference signal occupies a second slot; and

the feedback information of the first sidelink positioning reference signal and a second PSCCH are transmitted within a second slot simultaneously, or a second PSCCH is transmitted earlier than the feedback information of the first sidelink positioning reference signal;
wherein the second PSCCH is used to indicate a transmission resource and a retransmission resource of the feedback information of the first sidelink positioning reference signal.

67. The apparatus according to any one of claims 61 to 64, wherein the feedback information of the first sidelink positioning reference signal and a second-stage SCI are transmitted simultaneously, and the second-stage SCI indicates a sequence ID of the first sidelink positioning reference signal.

68. The apparatus according to claim 63, wherein the feedback information of the first sidelink positioning reference signal is a demodulation reference signal of a second PSCCH and/or a second PSSCH;

the feedback information of the first sidelink positioning reference signal and the second PSSCH are transmitted simultaneously, and a medium access control control element (MAC CE) of a first PSSCH indicates a signal transmit power of the demodulation reference signal; and
the feedback information of the first sidelink positioning reference signal and a second-stage SCI are transmitted simultaneously, and the second-stage SCI indicates the signal transmit power of the demodulation reference signal.

69. A target terminal, comprising:

a processor;
a transceiver connected to the processor; and
a memory configured to store executable instructions of the processor;
wherein the processor is configured to load and execute the executable instructions to implement the positioning method of the relative position according to any one of claims 1 to 18.

70. A reference terminal, comprising:

a processor;
a transceiver connected to the processor; and
a memory configured to store executable instructions of the processor;
wherein the processor is configured to load and execute the executable instructions to implement the positioning method of the relative position according to any one of claims 19 to 34.

71. A computer-readable storage medium, wherein the computer-readable storage medium has executable instructions stored therein, and the executable instructions are loaded and executed by a processor to implement the positioning methods of the relative position according to any one of claims 1 to 34.

72. A chip, comprising: a programmable logic circuit or a program, wherein a terminal equipped with the chip is configured to implement the positioning methods of the relative position according to any one of claims 1 to 34.

73. A computer program product, comprising: computer instructions stored in a computer-readable storage medium, wherein a processor of a computer device reads the computer instructions from the computer-readable storage medium and executes the computer instructions, to cause the computer device to perform the positioning methods of the relative position according to any one of claims 1 to 34.

74. A communication system, comprising: a target terminal and a reference terminal;
wherein the target terminal is a terminal according to claim 69, and the reference terminal is a terminal according to claim 70.

FIG. 1

FIG. 2

FIG. 3

FIG. 4

FIG. 5

FIG. 6

FIG. 7

FIG. 8

| A G C | D M R S | | | D M R S | | D M R S | | D M R S | | G A P |
|---|---|---|---|---|---|---|---|---|---|---|
| | PSCCH | | | | | | | | | |

FIG. 9

| RE#0 | | RE#2 | | RE#4 | | RE#6 | | RE#8 | | RE#10 | |
|---|---|---|---|---|---|---|---|---|---|---|---|
| Port 0 / Port 1 | | Port 0 / Port 1 | | Port 0 / Port 1 | | Port 0 / Port 1 | | Port 0 / Port 1 | | Port 0 / Port 1 | |

| RE#1 | RE#3 | RE#5 | RE#7 | RE#9 | RE#11 |

FIG. 10

| A first sidelink positioning reference signal is transmitted to a reference terminal | ⟋ 1110 |
|---|---|

| Feedback information of the first sidelink positioning reference signal transmitted by the reference terminal is received | ⟋ 1120 |
|---|---|

| A relative positioning result of a target terminal relative to the reference terminal is determined based on the feedback information of the first sidelink positioning reference signal | ⟋ 1130 |
|---|---|

FIG. 11

Schematic diagram of process of transmitting first sidelink
positioning reference signal 1200

1201                                    1202

| Target terminal |                      | Reference terminal |

$T_1$

$T_2$

Td

$T_3$

$T_4$

FIG. 12

Schematic diagram of multiplexing mode of OFDM 1300

| 0 | 1 | 2 | 3 | 4 | 5 | 6 | 7 | 8 | 9 | 10 | 11 | 12 | 13 |

First sidelink positioning reference
signal SL-PRS

First physical sidelink control
channel PSCCH

Automatic Gain Control AGC

Transceiving conversion GP

FIG. 13

Schematic diagram of signal indication mode 1400

| 0 | 1 | 2 | 3 | 4 | 5 | 6 | 7 | 8 | 9 | 10 | 11 | 12 | 13 |

First sidelink positioning reference signal SL-PRS

First physical sidelink control channel PSCCH

Transceiving conversion GP

Automatic gain control AGC

First PSSCH DMRS

FIG. 14

Schematic diagram of resource occupancy situation within first slot 1500

| 0 | 1 | 2 | 3 | 4 | 5 | 6 | 7 | 8 | 9 | 10 | 11 | 12 | 13 |

First sidelink positioning reference signal SL-PRS

First physical sidelink control channel PSCCH

Transceiving conversion GP

Automatic gain control AGC

First PSSCH DMRS

First PSSCH DMRS and second-stage SCI

Second-stage SCI

FIG. 15

Schematic diagram of transmission mode of reserved resource 1600

Frequency

Reserved resource

For a reference
terminals to transmit a
first SL-PRS

For a target terminal to
transmit a first SL-PRS

Time

FIG. 16

Schematic diagram of transmission mode of sidelink message 1700

1701

Target
terminal

1702

Reference
terminal

The target terminal
transmits a first SL-
PRS

The reference terminal
calculates a relative
direction based on the
first SL-PRS

The reference terminal
indicates the relative
direction by
transmitting a sidelink
message to the target
terminal

The target
terminal receives
the sidelink
message of the
reference terminal
to determine the
relative direction

FIG. 17

Schematic diagram of transmission mode of control signal 1800

1810

1820

1821

1811

n-$T_0$        n    n+$T_1$        n+$T_2$

FIG. 18

Schematic diagram of transmission mode of sidelink message 1900

1901

1902

Target terminal

Reference terminal

The target terminal transmits a first SL-PRS

The reference terminal calculates a relative distance according to the first SL-PRS

The reference terminal indicates the relative distance by transmitting a sidelink message to the target terminal

The target terminal receives the sidelink message of the reference terminal to determine the relative distance

FIG. 19

| A first sidelink positioning reference signal transmitted by a target terminal is received | ⟋— 2010 |

↓

| Feedback information of the first sidelink positioning reference signal is transmitted to the target terminal | ⟋— 2020 |

FIG. 20

| Target terminal | | Reference terminal |

2110, the target terminal transmits a first sidelink positioning reference signal to the reference terminal →

2120, the reference terminal transmits feedback information of the first sidelink positioning reference signal to the target terminal ←

| 2130, the target terminal determines a relative positioning result based on the feedback information of the first sidelink positioning reference signal |

FIG. 21

First transmitting module — 2210

First receiving module — 2220

First determining module — 2230

Calculation unit 2231

First selection module — 2240

FIG. 22

Second receiving module — 2310

Second transmitting module — 2320

Second transmitting module — 2330

Second determining module — 2340

FIG. 23

Communication device 2400

Processor 2401    Transmitter 2403

Bus    2405

Receiver 2402    Memory 2404

FIG. 24

## INTERNATIONAL SEARCH REPORT

| International application No. |
| --- |
| **PCT/CN2022/090699** |

**A.    CLASSIFICATION OF SUBJECT MATTER**

H04W 72/04(2009.01)i;  H04W 4/02(2018.01)i

According to International Patent Classification (IPC) or to both national classification and IPC

**B.    FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNABS, CNTXT, VEN, USTXT, EPTXT, WOTXT, CNKI, 3GPP, IEEE: 侧行链路, 定位参考信号, 终端, 物理侧行控制信道, 侧行链路控制信息, sidelink, PRS, UE, PSCCH, SCI

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2021086114 A1 (LG ELECTRONICS INC.) 06 May 2021 (2021-05-06)<br>    description, paragraphs 132-257, and figures 8-21 | 1-74 |
| X | CN 112788519 A (DATANG MOBILE COMMUNICATIONS EQUIPMENT CO., LTD.) 11 May 2021 (2021-05-11)<br>    description, paragraphs 128-249, and figures 5-11 | 1-74 |
| X | CN 110536234 A (ZTE CORP.) 03 December 2019 (2019-12-03)<br>    description, paragraphs 40-229, and figures 1-2 | 1-74 |
| A | CN 114339987 A (SPREADTRUM COMMUNICATIONS SHANGHAI INC.) 12 April 2022 (2022-04-12)<br>    entire document | 1-74 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 October 2022** | **30 December 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/090699**

| Patent document cited in search report | | | Publication date (day/month/year) | Patent family member(s) | | | Publication date (day/month/year) |
|---|---|---|---|---|---|---|---|
| WO | 2021086114 | A1 | 06 May 2021 | KR | 20220092916 | A | 04 July 2022 |
| CN | 112788519 | A | 11 May 2021 | WO | 2021093710 | A1 | 20 May 2021 |
| | | | | KR | 20220097477 | A | 07 July 2022 |
| CN | 110536234 | A | 03 December 2019 | WO | 2021027861 | A1 | 18 February 2021 |
| | | | | EP | 4017035 | A1 | 22 June 2022 |
| CN | 114339987 | A | 12 April 2022 | WO | 2022068836 | A1 | 07 April 2022 |

Form PCT/ISA/210 (patent family annex) (January 2015)